(19) Europäisches Patentamt / European Patent Office / Office européen des brevets

(11) **EP 3 194 454 B1**

(12) **EUROPÄISCHE PATENTSCHRIFT**


(45) Veröffentlichungstag und Bekanntmachung des Hinweises auf die Patenterteilung:
**06.11.2019 Patentblatt 2019/45**

(21) Anmeldenummer: **15775396.3**

(22) Anmeldetag: **18.09.2015**

(51) Int Cl.:
***C08F 2/26*** *(2006.01)* ***C08F 265/06*** *(2006.01)*
***C09D 151/00*** *(2006.01)*

(86) Internationale Anmeldenummer:
**PCT/EP2015/071400**

(87) Internationale Veröffentlichungsnummer:
**WO 2016/042116 (24.03.2016 Gazette 2016/12)**


(54) **FEINTEILIGE WÄSSRIGE EMULSIONSPOLYMERISATE UND DEREN VERWENDUNG FÜR HYDROPHOBE BESCHICHTUNGEN**

FINELY DIVIDED AQUEOUS EMULSION POLYMERS AND USE THEREOF FOR HYDROPHOBIC COATINGS

PRODUITS DE POLYMÉRISATION EN ÉMULSION AQUEUX À FINES PARTICULES ET LEUR UTILISATION POUR DES REVÊTEMENTS HYDROPHOBES


(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2014 EP 14185506**

(43) Veröffentlichungstag der Anmeldung:
**26.07.2017 Patentblatt 2017/30**



(73) Patentinhaber: **BASF SE**
**67056 Ludwigshafen (DE)**

(72) Erfinder:
- **BALK, Roelof**
**67459 Böhl-Iggelheim (DE)**
- **LOHMEIJER, Bastiaan**
**68163 Mannheim (DE)**

(74) Vertreter: **BASF IP Association**
**BASF SE**
**G-FLP-C006**
**67056 Ludwigshafen (DE)**



(56) Entgegenhaltungen:
**EP-A1- 1 167 477**
**JP-A- 2005 272 726**
**JP-A- 2009 191 228**
**JP-A- 2010 138 256**
**US-A1- 2005 107 527**


Bemerkungen:
Die Akte enthält technische Angaben, die nach dem Eingang der Anmeldung eingereicht wurden und die nicht in dieser Patentschrift enthalten sind.

**EP 3 194 454 B1**


Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft eine Polymerisat-Dispersion, erhältlich durch mindestens eine zweistufige Emulsionspolymerisation, wobei 1) ein Polymerisat A durch eine radikalische Polymerisation aus einer 1. Zusammensetzung hergestellt wird, umfassend A) mindestens ein Monomer, B) mindestens einen anionischen copolymerisierbaren Emulgator, 2) das unter 1) hergestellte Polymerisat A mit einer Base versetzt wird, wobei das gewichtsmittlere Molekulargewicht der Polymere der Polymerisation der ersten Stufe zwischen 5 und 25 kDa liegt und die Monomere der Polymerisation der ersten Stufe so ausgewählt sind, dass die für ein aus den Monomeren der ersten Stufe hergestelltes Polymer berechnete Glasübergangstemperatur im Bereich von 70 °C bis 125 °C liegt, 3) ein Polymerisat B durch radikalische Polymerisation aus einer 2. Zusammensetzung in Gegenwart des unter 2) behandelten Polymerisates A hergestellt wird, umfassend A) mindestens ein Monomer, B) mindestens einen anionischen copolymerisierbaren Emulgator wobei die Monomere der Polymerisation der zweiten Stufe so ausgewählt sind, dass die für ein aus den Monomeren der zweiten Stufe hergestelltes Polymer berechnete Glasübergangstemperatur im Bereich von 0 °C bis -80 °C liegt, wobei bei der Polymerisation der ersten Stufe mindestens ein Molekulargewichtsregler eingesetzt wird. Die vorliegende Erfindung betrifft auch ein Verfahren zur Herstellung der erfindungsgemäßen Polymerisat-Dispersion, Beschichtungsmittel in Form einer wässrigen Zusammensetzung, enthaltend die erfindungsgemäße Polymerisat-Dispersion, sowie die Verwendung der erfindungsgemäßen Polymerisat-Dispersion für Beschichtungsmassen oder Anstrichmittel.

Polymerisat-Dispersionen sind allgemein bekannt. Es handelt sich dabei um fluide Systeme, die als disperse Phase in wässrigem Dispergiermedium aus mehreren ineinander verschlungenen Polymerisatketten bestehenden Polymerisatknäueln, die sogenannte Polymermatrix oder Polymerisatpartikel, in disperser Verteilung befindlich enthalten. Der mittlere Durchmesser der Polymerisatpartikel liegt häufig im Bereich von 10 bis 1000 nm, insbesondere im Bereich von 30 bis 300 nm. Wässrige Polymerisat-Dispersionen werden in einer Vielzahl von technischen Anwendungen als Bindemittel eingesetzt.

Werden sie als Bindemittel für Beschichtungen von Untergründen eingesetzt ist eine der wichtigen Anforderungen für solche Beschichtungen, dass sie eine hohe Härte besitzen und damit eine gute Kratz- und Blockfestigkeit aufweisen. Aus ökologischen Gründen wird eine Verfilmung des Bindemittels im Bereich von < 0 bis 40 °C angestrebt, so dass keine oder nur geringe Mengen eines Filmbilde-Hilfsmittels benötigt werden. Eine andere Anforderung ist eine hohe Feinteiligkeit. Dieses ermöglicht die Herstellung von transparenten wässrigen Lasuren und ein gutes Eindringen der Lasur in den Untergrund, insbesondere wenn das zu beschichtende Substrat Holz ist.

Aus EP-B 0 710 680 ist bekannt, dass man durch mehrstufige Emulsionspolymerisation, Polymerisat-Dispersionen herstellen kann, die eine niedrige Mindestfilm-Bildetemperatur (MFT) aufweisen und Filme mit hoher Blockfestigkeit bilden. Solche Polymerisat-Dispersionen haben einen mittleren Polymerisat-Partikeldurchmesser von < 100 nm. Die Feinteiligkeit reicht allerdings in den meisten Fällen nicht aus, um damit im nassen Zustand gewünschte transparente Lasuren für Holzbeschichtungen zu formulieren. Holzlasuren bilden im trockenen Zustand transparente oder semitransparente Holzbeschichtungen. Sie enthalten transparente Pigmente (z.B. transparentes, ultrafeines Eisenoxid) in so geringer Menge, dass man die Struktur des Holzes noch erkennen kann.

Die WO 2008/152017 beschreibt ein Verfahren zur Herstellung einer wässrigen Polymerisat-Dispersion durch radikalisch initiierte wässrige Emulsionspolymerisation von ethylenisch ungesättigten Monomeren in Anwesenheit wenigstens eines Dispergiermittels und wenigstens eines Radikalinitiators. Die verwendeten Dispergiermittel werden dort in hohen Mengen verwendet.

In der WO 2012/130712 A1 sind mehrstufige wässrige Polymerisat-Dispersionen beschrieben, die bei niedrigen Temperaturen filmbildend sind, eine gute Blockfestigkeit in einer Formulierung aufweisen, auch bei erhöhten Temperaturen, eine geringe Schaumneigung zeigen, sowie eine gute Nasshaftung und Lagerstabilität besitzen. Ebenfalls werden Verfahren zu deren Herstellung sowie deren Verwendung als Bindemittel für die Beschichtung von Untergründen beschrieben. Die Herstellung erfolgt in Gegenwart von Emulgatoren.

Die WO 95/29963 A1 beschreibt ein Verfahren zur Herstellung einer wässrigen, vernetzbaren Polymerzusammensetzung, die frei ist von organischen Lösungsmitteln. Die Zusammensetzung umfasst ein säure-funktionelles Polymer mit einer Tg von 10 bis 125 °C, vernetzbare funktionelle Gruppen und ein Polymer B mit einer Tg von mindestens 25°C unter der des Polymers A.

Die WO 95/29944 A1 beschreibt ein Verfahren zur Herstellung einer organischen Lösungsmittel-freien wässrigen vernetzbaren Polymerzusammensetzung, wobei das Verfahren frei von organischem Lösungsmittel ist. In dem Dokument werden keine anionischen copolymersierbaren Emulgatoren beschrieben.

In der WO 2012/084973 wird eine wässrige Polymerbeschichtungszusammensetzung, umfassend mindestens ein Vinylpolymer A mit einem Massenmittel der Molmasse Mw im Bereich von 1.000 bis 150.000 g / mol und eine Säurezahl > 5 mg KOH / g und ein Vinylpolymer B mit einem Massenmittel der Molmasse Mw von mindestens 80.000 g / mol und eine Säurezahl <35 mg KOH / g, beschrieben. In dem Dokument werden keine anionischen copolymerisierbaren Emulgatoren beschrieben.

WO 2012/084974 A1 beschreibt eine wässrige Polymerdispersion, enthaltend ein Vinylpolymer mit wenigstens

zwei Phasen, umfassend: A) 40 bis 90 Gew.-% eines Vinylpolymers A mit einer Glasübergangstemperatur im Bereich von -50 bis 30 ° C und B) 10 bis 60 Gew.-% eines Vinylpolymeren B mit einer Glasübergangstemperatur der Bereich von 50 bis 130 °C, wobei das Vinylpolymer A 0,1 bis 10 Gew.-% von mindestens einem säurefunktionellen olefinisch ungesättigten Monomeren enthält, wobei mindestens 20 Gew.-% des Vinylpolymers verwendet werden, um ein Vinylpolymer zu bilden, und das Vinylpolymer B aus zumindest einem biologisch abgeleiteten regenerativen olefinisch ungesättigte Monomer abgeleitet ist.

EP 0 338 486 A2 beschreibt ein Verfahren zur Herstellung von stabilisiertem Latex, gekennzeichnet durch die Schritte: a) Vermischen von Latex bildenden Monomeren unter Emulsionspolymerisationsbedingungen, um in einer ersten Stufe eine hydrophile niedermolekulare Polymerreaktionsmischung zu formen, die aufgrund einer pH-Wert Einstellung wasserlöslich werden kann; b) Kontaktieren der Reaktionsmischung, enthaltend das Polymer der ersten Stufe mit Latex-bildenden Monomeren unter Emulsionspolymerisationsbedingungen, um in einer zweiten Stufe ein hydrophobes Polymer zu bilden, das eine inverse Kern-Schale-Emulsion mit dem Polymer aus der ersten Stufe bildet, und c) Einstellen des pH-Wertes der Emulsion, um das Polymers der ersten Stufe als auch den hergestellten Latex aufzulösen.

Die WO 2012/2140042 beschreibt ein Verfahren zur Herstellung von wässrigen Vinylpolymer-Dispersionen, die gute Filmbildungseigenschaften, eine gute Stabilität und eine Klarheit aufweisen, sowie eine Polymerdispersionen, erhältlich durch das Verfahren, und Beschichtungszusammensetzungen, hergestellt aus dem Polymerdispersionen. In dem Dokument wird an keiner Stelle eine zweistufige Emulsionspolymerisation beschrieben, in der jeweils ein copolymerisierbarer Emulgator verwendet wird.

Die EP 2 371 870 A1 beschreibt ein Mehrstufen-Emulsionspolymer, umfassend 10 bis 30 Gew.-%, bezogen auf das Gewicht des Mehrstufen-Emulsionspolymers, einer Schale, eines ersten Polymers mit einer Säurezahl von 5 bis 100, wobei das erste Polymer ein berechnetes Mn von 1000 bis 4500 und eine berechnete Tg von weniger als 100°C aufweist, und von 70 bis 90 Gew.-%, bezogen auf das Gewicht des Mehrstufen-Emulsionspolymers, eines Kerns eines zweiten Polymers mit einer Säurezahl von 0 bis zur Hälfte der Säurezahl des ersten Polymers, wobei das zweite Polymer eine berechnete Mn von größer als 20000 aufweist.

US 2005/107527 A1 beschreibt ein mehrstufiges Polymerisationsverfahren zur Herstellung von Polymerisat-Dispersionen unter Verwendung von anionischen copolymerisierbaren Emulgatoren. Hierbei erfolgt die Zugabe einer Base bereits bei Beginn der Polymerisationsreaktion der ersten Stufe.

Die Aufgabe der vorliegenden Erfindung war es feinteilige Emulsionspolymerisate herzustellen, die es ermöglichen, transparente Lasuren unter Verwendung von polymeren Verdickern zu formulieren und trotzdem eine hervorragende Wasserfestigkeit aufweisen. Weiterhin bestand die Aufgabe darin Emulsionspolymerisate bereitzustellen, die eine Filmbildung bei niedriger Temperatur ermöglichen, insbesondere unter 5 °C und ohne Einsatz von Filmbilde-Hilfsmitteln. Darüber hinaus sollten die Beschichtungen eine hohe Härte und Blockresistenz aufweisen.

Die Aufgabe wird gelöst durch eine Polymerisat-Dispersion, erhältlich durch mindestens eine zweistufige Emulsionspolymerisation, wobei

1) ein Polymerisat A durch eine radikalische Polymerisation aus einer 1. Zusammensetzung hergestellt wird, umfassend

    A) mindestens ein Monomer,

    B) mindestens einen anionischen copolymerisierbaren Emulgator,

2) das unter 1) hergestellte Polymerisat A mit einer Base versetzt wird, wobei das gewichtsmittlere Molekulargewicht der Polymere der Polymerisation der ersten Stufe zwischen 5 und 25 kDa liegt und die Monomere der Polymerisation der ersten Stufe so ausgewählt sind, dass die für ein aus den Monomeren der ersten Stufe hergestelltes Polymer berechnete Glasübergangstemperatur im Bereich von 70 °C bis 125 °C liegt,

3) ein Polymerisat B durch radikalische Polymerisation aus einer 2. Zusammensetzung in Gegenwart des unter 2) behandelten Polymerisates A hergestellt wird, umfassend

    A) mindestens ein Monomer,
    B) mindestens einen anionischen copolymerisierbaren Emulgator, wobei die Monomere der Polymerisation der zweiten Stufe so ausgewählt sind, dass die für ein aus den Monomeren der zweiten Stufe hergestelltes Polymer berechnete Glasübergangstemperatur im Bereich von 0 °C bis -80 °C liegt,

wobei bei der Polymerisation der ersten Stufe mindestens ein Molekulargewichtsregler eingesetzt wird.

Die Aufgabe wird ebenfalls durch ein Verfahren zur Herstellung der erfindungsgemäßen Polymerisat-Dispersion

gelöst, wobei
mindestens eine zweistufige Emulsionspolymerisation durchgeführt wird, umfassend die Schritte:

1) Herstellung eines Polymerisats A durch eine radikalische Polymerisation aus einer 1. Zusammensetzung, umfassend

A) mindestens ein Monomer,

B) mindestens einen anionischen copolymerisierbaren Emulgator,

2) Versetzen des unter 1) hergestellte Polymerisats A mit einer Base, wobei das gewichtsmittlere Molekulargewicht der Polymere der Polymerisation der ersten Stufe zwischen 5 und 25 kDa liegt und die Monomere der Polymerisation der ersten Stufe so ausgewählt sind, dass die für ein aus den Monomeren der ersten Stufe hergestelltes Polymer berechnete Glasübergangstemperatur im Bereich von 70 °C bis 125 °C liegt,

3) Herstellung eines Polymerisats B durch radikalische Polymerisation aus einer 2. Zusammensetzung in Gegenwart des unter 2) behandelten Polymerisates A, umfassend

A) mindestens ein Monomer,

B) mindestens einen anionischen copolymerisierbaren Emulgator, wobei die Monomere der Polymerisation der zweiten Stufe so ausgewählt sind, dass die für ein aus den Monomeren der zweiten Stufe hergestelltes Polymer berechnete Glasübergangstemperatur im Bereich von 0 °C bis -80 °C liegt,

wobei bei der Polymerisation der ersten Stufe mindestens ein Molekulargewichtsregler eingesetzt wird.

Dabei kann die Emulsionspolymerisation der ersten und zweiten Stufe mit wasserlöslichen Initiatoren gestartet werden.

Die Aufgabe wird zudem durch ein Beschichtungsmittel in Form einer wässrigen Zusammensetzung, enthaltend

i) wenigstens eine erfindungsgemäße Polymerisat-Dispersion,

ii) gegebenenfalls wenigstens einen (an)organischen Füllstoff und/oder ein (an)organisches Pigment,

iii) gegebenenfalls ein Additiv,

iv) Wasser, gelöst.

Ebenfalls wird die Aufgabe durch die Verwendung der erfindungsgemäßen Polymerisat-Dispersion für Beschichtungsmassen oder Anstrichmittel gelöst.

Die Durchführung von radikalisch initiierten Emulsionspolymerisationen von Monomeren, insbesondere ungesättigte Monomere, in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D. C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierten wässrigen Emulsionspolymerisationsreaktionen erfolgen üblicherweise dergestalt, dass man die (ethylenisch ungesättigten) Monomere unter Mitverwendung von Dispergiermitteln, im wässrigen Medium in Form von Monomerentröpfchen dispers verteilt und mittels eines radikalischen Polymerisationsinitiators polymerisiert.

Unter "zweistufiger" Emulsionspolymerisation kann im Sinne der vorliegenden Erfindung eine Emulsionspolymerisation verstanden werden, in der in einer ersten Stufe eine radikalische Emulsionspolymerisation erfolgt und die in der 1. Zusammensetzung enthaltenden Monomere komplett zu einem Polymer polymerisieren. Daran schließt sich gegebenenfalls eine Neutralisierung mit einer Base an. Anschließend erfolgt eine zweite Stufe, in der neue Monomere mittels einer radikalischen Emulsionspolymerisation in Gegenwart des Polymers aus der der ersten Stufe zu einem Polymer polymerisiert werden. Im Sinne der vorliegenden Erfindung entspricht "1) " der ersten Stufe und "3) " der zweiten Stufe in der Emulsionspolymerisation.

Der Begriff "copolymerisierbarer Emulgator" umfasst Monomere, die neben radikalisch polymerisierbaren Gruppen einen lipophilen Rest und einen hydrophilen Rest aufweisen. Dadurch ist es möglich zwei nicht mischbare Substanzen miteinander zu mischen, so dass eine Dispersion, insbesondere eine Emulsion, entsteht.

Unter einem "Polymerisat" kann im Sinne der vorliegenden Erfindung ein Gemisch von Polymeren verstanden werden, das bei einer Bildungsreaktion aus Monomeren zu Makromolekülen entsteht.

Der Begriff (an)organisch umfasst anorganisch und/oder organisch.

Die Herstellung der erfindungsgemäßen Polymerdispersion erfolgt durch Emulsionspolymerisation. Bei der Emulsionspolymerisation werden ungesättigte Verbindungen (Monomere), insbesondere ethylenisch ungesättigte Verbindungen, in Wasser polymerisiert.

Dabei werden die anionischen copolymerisierbaren Emulgatoren (auch Schutzkolloide bzw. Stabilisatoren genannt) als grenzflächenaktive Verbindungen zur Stabilisierung der Monomertröpfchen und der später aus den Monomeren gebildeten Polymerteilchen verwendet. Erfindungsgemäß erfolgt aber sowohl die Polymerisation der ersten Stufe als auch die Polymerisation der zweiten Stufe in Gegenwart der anionischen copolymerisierbaren Emulgatoren. Vorzugsweise wird insgesamt weniger als 2,5 oder weniger als 2 ,0 Gew.-% anionischer copolymerisierbarer Emulgator, insbesondere weniger als 1,5 Gew.-%, bezogen auf den Feststoffgehalt der fertigen Polymerisat-Dispersion, eingesetzt.

Vorzugsweise beträgt der Feststoffgehalt der Dispersion 25-55 Gew.-%, bezogen auf die Gesamtmenge der flüssigen Komponenten der Dispersion. Besonders bevorzugt beträgt der Feststoffgehalt 30-50 Gew.-%.

Den Polymerdispersionen können weiterhin übliche Hilfs-und Zusatzstoffe zugesetzt werden. Dazu zählen beispielsweise pH-Wert-einstellende Substanzen, Reduktions-und Bleichmittel, wie z. B. die Alkalimetallsalze der Hydroxymethansulfinsäure (z. B. Rongalit®C der BASF Aktiengesellschaft), Komplexbildner, Desodorantien, Geruchsstoffe und Viskositätsmodifizierer, wie Alkohole, z. B. Glycerin, Methanol, Ethanol, tert.-Butanol, Glykol etc. Diese Hilfs-und Zusatzstoffe können den Polymerdispersionen in der Vorlage, einem der Zuläufe oder nach Abschluss der Polymerisation zugesetzt werden.

Vorzugsweise wird das Polymerisat A mit einer Base versetzt. Dabei kann die Neutralisation beispielsweise von Säuregruppen des Polymerisats A erfolgen, insbesondere durch zumindest teilweisen Zulauf einer Base vor und/oder während der Polymerisation der zweiten Stufe. Die Base kann dabei in einem gemeinsamen Zulauf mit den zu polymerisierenden Monomeren oder in einem separaten Zulauf zugegeben werden, insbesondere nach der ersten Stufe. Nach Zulauf sämtlicher Monomere der 2. Stufe ist vorzugsweise die zur Neutralisation von mindestens 70%, vorzugsweise 70 bis 100% oder 70 bis 95% Säureäquivalenten benötigte Menge an Base in dem Polymerisationsgefäß enthalten.

Die im Anschluss an die erste Stufe ausgeführte Neutralisation erfolgt mit einer Base. Die Base führt zu einer teilweisen oder kompletten Neutralisation der ionischen oder latent-ionischen Gruppen des Polymeren der ersten Stufe; sie kann zu einer Quellung der Polymerteilchen führen, aber sie auch komplett in Lösung überführen. Vorzugsweise wird nur eine Teilneutralisierung durchgeführt, beispielsweise mindestens 70% der vorhandenen ionischen oder latent-ionischen Gruppen. Als Basen können beispielsweise Alkali-oder Erdalkaliverbindungen wie Natriumhydroxid, Kaliumhydroxid, Calciumhydroxid, Magnesiumoxid, Natriumcarbonat; Ammoniak; primäre, sekundäre und tertiäre Amine, wie Ethylamin, Propylamin, Monoisopropylamin, Monobutylamin, Hexylamin, Ethanolamin, Dimethylamin, Diethylamin, Di-n-propylamin, Tributylamin, Triethanolamin, Dimethoxyethylamin, 2- Ethoxyethylamin, 3-Ethoxypropylamin, Dimethylethanolamin, Diisopropanolamin, Morpholin, Ethylendiamin, 2-Diethylaminethylamin, 2,3-Diaminopropan, 1,2-Propylendiamin, Dimethylaminopropylamin, Neopentandiamin, Hexamethylendiamin, 4,9-Dioxadodecan-1 ,12-diamin, Polyethylenimin oder Polyvinylamin eingesetzt werden.

Vorzugsweise wird Ammoniak als Base verwendet.

Die Polymerisation kann in der ersten Stufe mittels der Methode der in-situ Saatfahrweise durchgeführt werden. Dazu wird ein Teil eines Monomers oder des Monomergemisches der ersten Stufe, beispielsweise < 35 Gew.%, vorzugsweise < 20 Gew.%, bezogen auf das Gesamtgewicht der Monomere der ersten Stufe, zusammen mit dem anionischen copolymerisierbaren Emulgator, zum Beispiel < 10 Gew.%, vorzugsweise < 3 Gew.%, bezogen auf das Gesamtgewicht der Monomere der ersten Stufe vorgelegt und mit Hilfe eines Initiators anpolymerisiert, wonach anschließend die restliche Menge der ersten Stufe zu dosiert wird.

Die Zugabe der Monomeren der zweiten Stufe kann im Sinne einer Gradienten-Fahrweise erfolgen. Unter der Gradienten-Fahrweise im Sinne der vorliegenden Erfindung versteht man eine Emulsionspolymerisation, bei der ein oder mehrere Monomere mit nicht konstanter Geschwindigkeit zu dosiert werden. Aus Gründen der einfachen apparativen Handhabbarkeit wurden bei den hier beschriebenen Experimenten die Geschwindigkeiten nicht kontinuierlich (="echter Gradient"), sondern stufenweise (= interpolierter Gradient) variiert (im mathematischen Sinne stellt somit die Auftragung der Dosiergeschwindigkeit gegen die Zeit eine nichtstetige Funktion dar). Kontinuierliche Geschwindigkeitsänderungen sind prinzipiell aber auch ohne großen Mehraufwand durchführbar.

Das gewichtsmittlere Molekulargewicht der Polymere der Polymerisation der ersten Stufe liegt zwischen 5 und 25 kDa. Die Monomere der Polymerisation der ersten Stufe sind so ausgewählt, dass die für ein aus den Monomeren der ersten Stufe hergestelltes Polymer berechnete Glasübergangstemperatur im Bereich von 70 °C bis 125 °C liegt.

Durch gezielte Variation von Art und Menge der Monomeren ist es dem Fachmann erfindungsgemäß möglich, Polymerzusammensetzungen, insbesondere wässrige Polymerzusammensetzungen, herzustellen, deren Polymere

eine Glasübergangstemperatur im gewünschten Bereich aufweisen. Eine Orientierung ist mittels der Fox-Gleichung möglich. Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für eine Berechnung der Glasübergangstemperatur von Mischpolymerisaten in guter Näherung:

$$1 /Tg = X^1 Tg^1 + X^2/Tg^2 + .... X^n/Tg^n,$$

wobei $x^1$, $x^2$,.. $x^n$ die Massenbrüche der Monomeren 1, 2... n und $Tg^1$, $Tg^2$... $Tg^n$ die Glasübergangstemperaturen der jeweils nur aus einem der Monomeren 1, 2... n aufgebauten Polymerisaten in Grad Kelvin bedeuten. Die Tg-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1stEd., J. Wiley, New York 1966, 2nd Ed. J. Wiley, New York 1975, und 3rd Ed. J. Wiley, New York 1981. Für Ethylacrylat wird ein Wert von -13 °C verwendet.

Die Monomere der Polymerisation der zweiten Stufe sind so ausgewählt, dass die für ein aus den Monomeren der zweiten Stufe hergestelltes Polymer berechnete Glasübergangstemperatur im Bereich von 0 °C bis -80 °C.

Die Emulsionspolymerisation der ersten und zweiten Stufe kann mit wasserlöslichen Initiatoren gestartet werden. Wasserlösliche Initiatoren sind z.B. Ammonium und Alkalimetallsalze der Peroxodischwefelsäure, z.B. Natriumperoxodisulfat, Wasserstoffperoxid oder organische Peroxide, z.B. tert-Butylhydroperoxid. Als Initiator geeignet sind auch so genannte ReduktionsOxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z.B. um die bereits vorstehend genannten Initiatoren für die Emulsionspolymerisation. Bei der Reduktionskomponenten handelt es sich z.B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z.B. Ascorbinsäure/Eisen(II)sulfat/Natriumperoxidisulfat, tert-Butylhydroperoxid/ Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Initiatoren können in Form wässriger Lösungen eingesetzt werden, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration der Initiatoren 0,1 bis 30 Gew.-%, bevorzugt 0,2 bis 20 Gew.-%, besonders bevorzugt 0,3 bis 10 Gew.-%, bezogen auf die zu polymerisierenden Monomeren in der jeweiligen Stufe. Es können auch mehrere, verschiedene Initiatoren bei der Emulsionspolymerisation Verwendung finden.

In der Polymerisation, insbesondere in der 1. Zusammensetzung, kann mindestens eines der folgenden Monomere A1), A2) und/oder A3) als A) eingesetzt werden:

A1) (Meth)acrylsäure(cyclo)alkylester, Vinylaromat, radikalisch polymerisierbare Verbindungen, Vernetzer und/oder $\alpha,\beta$-ethylenisch ungesättigtes Carbonsäureamid.

Dies umfasst bevorzugt solche (Meth)acrylsäure(cyclo)alkylester, deren linearer, zyklischer und/oder verzweigter Alkylrest 1 bis 20 Kohlenstoffatome aufweist, besonders bevorzugt 1 bis 10, ganz besonders bevorzugt 1 bis 8 und insbesondere 1 bis 4 Kohlenstoffatome. Bei zyklischen Verbindungen weist der Alkylrest mindestens 3 Kohlenstoffatome auf.

Zu nennen als Beispiele für (Meth)acrylsäure(cyclo)alkylester sind (Meth)acrylsäuremethylester, Allyl(meth)acrylat, (Meth)acrylsäureethylester, (Meth)acrylsäure-n-propylester, (Meth)acrylsäure-n-butylester, (Meth)acrylsäure-iso-butylester, (Meth)acrylsäure-sek-butylester, (Meth)acrylsäure-tert-butylester, (Meth)acrylsäure-n-pentylester, (Meth)acrylsäure-iso-pentylester, (Meth)acrylsäure-2-methyl-butylester, (Meth)acrylsäureamylester, 2,3-Epoxypropylmethacrylat, (Meth)acrylsäure-n-hexylester, (Meth)acrylsäure-2-ethylbutylester, (Meth)acrylsäurepentylester, (Meth)acrylsäure-n-heptylester, (Meth)acrylsäure-n-octylester, (Meth)acrylsäure-2-ethylhexylester (2-Ethylhexylacrylat), (Meth)acrylsäure-2-propylheptylester, (Meth)acrylsäure-n-decylester, (Meth)acrylsäureundecylester und (Meth)acrylsäure-n-dodecylester und (Meth)acrylsäure-cyclo-hexylester.

Bevorzugt sind Methylmethacrylat, Methylacrylat, Ethylacrylat, n-Butylacrylat, n-Butylmethacrylat, n-Hexylacrylat, n-Octylacrylat, 2-Ethylhexylacrylat, Allylmethacrylat, Allylacrylat, 2,3-Epoxypropyl(meth)acrylat und 3-Propylheptylacrylat oder Mischungen davon.

Bevorzugt umfasst sind Vinylaromaten mit bis zu 20 C-Atomen.

Als vinylaromatische Verbindungen kommen Vinyltoluol, Vinylnaphthalin, α- und p-Methylstyrol, α-Butylstyrol, 4-n-Butylstyrol, 4-n-Decylstyrol und vorzugsweise Styrol und α-Methylstyrol in Betracht.

Die mindestens eine radikalisch polymerisierbare Verbindung ist ausgewählt aus der Gruppe bestehend aus ethylenisch ungesättigten Nitrilen mit bis zu 20 C-Atomen, Vinylestern von bis zu 20 C-Atome enthaltenden Carbonsäuren, Vinylhalogeniden mit bis zu 10 C-Atomen und Vinylethern von 1 bis 10 C-Atome enthaltenden Alkoholen oder Mischungen daraus.

Beispiele für ethylenisch ungesättigte Nitrile sind Fumarsäuredinitril, Acrylnitril und Methacrylnitril, bevorzugt Acrylnitril und Methacrylnitril und besonders bevorzugt Acrylnitril. Vinylester von Carbonsäuren mit 1 bis 20 C-Atomen sind z.B. Vinyllaurat, Vinylstearat, Vinylpropionat, Versaticsäurevinylester, Vinylbutyrat und Vinylacetat, bevorzugt Vinylacetat. Die Vinylhalogenide sind mit Chlor, Fluor oder Brom substituierte ethylenisch ungesättigte Verbindungen, bevorzugt Vinylchlorid und Vinylidenchlorid.

Vernetzer sind Verbindungen, die mindestens zwei radikalisch polymerisierbare Doppelbindungen aufweisen, bevorzugt 2 bis 6, besonders bevorzugt 2 bis 4, ganz besonders bevorzugt 2 bis 3 und insbesondere genau 2.

Als Beispiele genannt seien für Di- und Poly(meth)acrylate 1,2-, 1,3- und 1,4-Butandioldiacrylat, 1,2-und 1,3-Propylenglykol(meth)acrylat, 1,6-Hexandioldi(meth)acrylat, 1,2-Ethylenglykoldi(meth)acrylat, Neopentylglykoldi(meth)acrylat, Diethylenglykoldi(meth)-acrylat, Triethylenglykoldi(meth)acrylat, Tetraethylenglykoldi(meth)acrylat, Trimethylol-propan-tri(meth)acrylat, Trimethylolethantri(meth)acrylat, Pentaerythritoltri- und -tetra(meth)acrylat. Ferner erwähnt sei Divinylbenzol und Allyl(meth)acrylat.

Das α,β-ethylenisch ungesättigte Carbonsäureamid ist ausgewählt aus der Gruppe bestehend aus (Meth)acrylsäureamid, Crotonsäureamid, Amiden von Dicarbonsäuren oder Mischungen daraus. Besonders bevorzugt ist Itaconsäurediamid, Maleinsäurediamid oder Fumarsäurediamid, insbesondere bevorzugt sind Methacrylsäureamid und Acrylsäureamid.

Insbesondere sind auch Mischungen der (Meth)acrylsäure(cyclo)alkylester, Vinylaromaten, radikalisch polymerisierbaren Verbindungen, Vernetzer und/oder α,β-ethylenisch ungesättigte Carbonsäureamide geeignet.

A2) mindestens eine α,β-ethylenisch ungesättigte Carbonsäure

Dabei handelt es sich um 3 bis 10, bevorzugt 3 bis 6, besonders bevorzugt 3 bis 4 Kohlenstoffatome aufweisende α, β-ethylenisch ungesättigten Carbonsäuren. Optional können die ionischen Gruppen auch latent vorhanden sein, wie beispielsweise in Maleinsäureanhydrid, wo die säure Funktionalität in der Form einer Anhydridgruppe vorhanden ist.

Bevorzugt sind (Meth)acrylsäure, Crotonsäure oder Dicarbonsäuren, z.B. Itaconsäure, Maleinsäure oder Fumarsäure, besonders bevorzugt Methacrylsäure und Acrylsäure, oder auch Mischungen davon.

(Meth)Acryl(säure) steht in dieser Beschreibung für Methacryl(säure) und Acryl(säure).

Die Verbindungen A3) sind ausgewählt aus der Gruppe bestehend aus (Meth)- acrylsäure 2-(2-oxo-imidazolidin-1-yl)-ethyl ester, 2-Ureidoethyl(meth)acrylat (UMA), Acetoacetoxyethyl acrylat, Acetoacetoxypropyl methacrylat, Acetoacetoxybutyl methacrylat, 2-(Acetoacetoxy) ethyl methacrylat (AAEMA), Diacetonacrylamid (DAAM), Diacetonmethacrylamid oder Mischungen daraus.

Vorzugsweise weist das Monomer A1) in der 1. Zusammensetzung 40 bis 94 Gew.-%, besonders bevorzugt 42 bis 80 Gew.-% und ganz besonders bevorzugt 65 bis 80 Gew.-%, wobei die Mengenangaben von A1) auf jeweils 100 Gew.-% der in der 1. Zusammensetzung zu polymerisierenden Monomere bezogen ist, auf.

Vorzugsweise weist das Monomer A2) in der 1. Zusammensetzung 1 bis 15 Gew.-%, besonders bevorzugt 2 bis 13 Gew.-% und ganz besonders bevorzugt 5 bis 12 Gew.-%, wobei die Mengenangaben von A2) auf jeweils 100 Gew.-% der in der 1. Zusammensetzung zu polymerisierenden Monomere bezogen ist, auf.

Vorzugsweise weist das Monomer A3) in der 1. Zusammensetzung 5 bis 45 Gew.-%, besonders bevorzugt 5 bis 30 Gew.-% und ganz besonders bevorzugt 5 bis 15 Gew.-%, wobei die Mengenangaben von A3) auf jeweils 100 Gew.-% der in der 1. Zusammensetzung zu polymerisierenden Monomere bezogen ist, auf.

Bevorzugt wird in der erfindungsgemäßen Polymerisat-Dispersion ein Polymerisat A in wässrigem Medium durch eine radikalische Emulsionspolymerisation hergestellt.

Bevorzugt ist in der erfindungsgemäßen Polymerisat-Dispersion das Polymerisat A in Wasser dispergiert.

Die eingesetzten Vinylmonomere, insbesondere die Monomere A3), können Monomere mit funktionalen Gruppen wie vernetzende Gruppen und hydrophile in Wasser dispergierbare Gruppen umfassen. Einige funktionale Gruppen können mehr als eine Funktion haben. (Meth)acrylsäure wird beispielsweise normalerweise als Wasser dispergierbares Monomer benutzt, kann hier aber auch als vernetzendes Monomer agieren, und z.B. reagieren mit Epoxidverbindungen oder Carbodiimiden.

Die funktionellen Gruppen der Monomere tragen zur Vermittlung der latenten Vernetzbarkeit der Zusammensetzung bei. Dabei findet die Vernetzung entweder durch Reaktion miteinander oder durch Zugabe eines vernetzenden

Additivs statt. Bevorzugt findet die Vernetzung erst nach der eigentlichen Filmbildung statt.

Dabei ist es wichtig, nicht zu viel vernetzendes Additiv einzusetzen, da dies zu Restvernetzungsmittel-Rückständen führen kann. Zu wenig vernetzendes Additiv andererseits kann zu einer löslichen Beschichtung führen.

Bevorzugt enthält die erfindungsgemäße Polymerisat-Dispersion noch ein vernetzendes Additiv.

Dabei kann das vernetzende Additiv ein Polyhydrazid, ein Polyamin oder eine Mischung daraus sein. Funktionelle Vernetzergruppen sind beispielsweise Keto-, Aldehyd-und/oder Acetoacetoxy Carbonylgruppen, und die anschließend zugesetzten, formulierten, vernetzenden Additive (Vernetzungsmittel) können ein Polyamin wie Ethylendiamin, Propylendiam, Butylendiamin, 1,6-Hexamethylendiamin (HMDA), Octamethylendiamin, ein ethoxy/propoxyliertes Dioder Polyamin, ein di- oder trifunktionelles Jeffamine, Isophorondiamin, 4,7-Dioxadecan-1,10-Diamin, oder Polyhydrazid wie Adipinsäuredihydrazid (ADDH), Oxalsäuredihydrazid, Phthalsäuredihydrazid, oder Terephthalsäuredihydrazid umfassen, oder ein vernetzendes Additiv, das semi-Carbazid oder hydrazinfunktionelle Gruppen trägt. Alternativ könnte das Polymer hydrazidfunktionelle Gruppen tragen und das anschließend formulierte, vernetzende Additiv (Vernetzungsmittel) könnte ketofunktionelle Gruppen enthalten.

Die funktionellen Gruppen können auch Carboxylfunktionen sein und das anschließend formulierte Vernetzungsmittel könnte Aziridin-, Epoxid-oder Carbodiimid-funktionelle Gruppen enthalten, oder die funktionellen Gruppen können silanfunktionelle Gruppen sein und das anschließend formulierte, vernetzende Additiv (Vernetzungsmittel) kann ebenfalls silanfunktionelle Gruppen enthalten.

Die funktionellen Gruppen können auch Ureidogruppen sein und das anschließend zugegebene vernetzende Additiv ein Polyaldehyd, beispielsweise ein 1 bis 10 C-Atome aufweisendes $\alpha,\omega$-Dialdehyd wie Glyoxal, Glutardialdehyd oder Malondialdehyd bzw. deren Acetale und Halbacetale, wie es beispielsweise in der EP 0789724 beschrieben wird.

Vorzugsweise enthält die erfindungsgemäße Polymerisat-Dispersion 2 bis 15 Gew.-%, bezogen auf die Gesamtmenge der in der 1. Zusammensetzung verwendeten Monomere, eines vernetzenden Additives.

Bevorzugt enthält die erfindungsgemäße Polymerisat-Dispersion 20 bis 500 Gew.-% und besonders bevorzugt 20 bis 100 Gew.-%, bezogen auf die Gesamtmenge des in der 1. Zusammensetzung verwendeten Monomeren A3), eines vernetzenden Additives.

Bevorzugt umfasst in der erfindungsgemäßen Polymerisat-Dispersion die 1. Zusammensetzung

A1) mindestens einen (Meth)acrylsäure(cyclo)alkylester,

A2) mindestens eine $\alpha,\beta$-ethylenisch ungesättigte Carbonsäure,

A3) mindestens eine Verbindung ausgewählt aus der Gruppe bestehend aus (Meth)- acrylsäure 2-(2-oxo-imidazolidin-1 -yl)-ethyl ester, 2-Ureidoethyl(meth)acrylat (UMA), Acetoacetoxyethyl acrylat, Acetoacetoxypropyl methacrylat, Acetoacetoxybutyl methacrylat, 2-(Acetoacetoxy) ethyl methacrylat, Diacetonacrylamid (DAAM), Diacetonmethacrylamid oder Mischungen daraus, und

A4) mindestens einen Molekulargewichtsregler, und

B) mindestens einen anionischen copolymerisierbaren Emulgator.

In einer bevorzugten Ausführungsform der Erfindung wird bei der Polymerisation der ersten Stufe mindestens ein Molekulargewichtsregler eingesetzt. Hierdurch kann durch eine Kettenabbruchsreaktion die Molmasse des Emulsionspolymerisats verringert werden. Die Regler werden dabei an das Polymer gebunden, im Allgemeinen an das Kettenende. Die Menge der Regler beträgt insbesondere 0,05 bis 5 Gew.-Teile, besonders bevorzugt 0,05 bis 2 Gew.-Teile bezogen auf 100 Gew.-Teile der insgesamt in der ersten und zweiten Stufe zu polymerisierenden Monomeren. Geeignete Regler sind z.B. Verbindungen mit einer Thiolgruppe wie tert.-Butylmercaptan, Thioglycolsäurealkylester, Mercaptoethanol, Mercaptopropionsäure, 2-Ethylhexlthioglykolat, Mercaptopropyltrimethoxysilan, n-oder tert.-Dodecylmercaptan. Bei den Reglern handelt es sich im Allgemeinen um niedermolekulare Verbindungen mit einem Molgewicht kleiner 2000, insbesondere kleiner 1000 g/mol.

Besonders bevorzugt ist 2-Ethylhexylthioglykolat, Thioglycolsäurealkylester, Mercaptopropionsäure und/oder i-Octylmercaptopropionat.

Ebenfalls kann als Molekulargewichtsregler eine katalytische Menge eines Übergangsmetallkomplexes und insbesondere eines Kobalt-Chelatkomplexes eingesetzt werden; diese Technik ist auf dem Fachgebiet als katalytische Kettentransfer-Polymerisation bekannt (CCT = catalytic chain transfer).

Eine derartige Technik wird in der Literatur beschrieben. Verschiedene Literaturstellen wie z. B. N. S. Enikolopyan et al., J. Polym. Sci., Polym. Chem. Ed., Band 19, 879 (1981) offenbaren z. B. die Verwendung von Kobalt(II)-Porphyrinkomplexen als Kettentransferagenzien bei der Radikalpolymerisation, während US 4 526 945 die Verwendung von Dioxim-Komplexen von Kobalt(II) für diesen Zweck offenbart. Verschiedene andere Publikationen, z. B. US 4 680

354, EP-A-0 196 783 und EP-A-0 199 436 beschreiben die Verwendung von bestimmten und anderen Typen von Kobalt(II)-Chelaten als Kettentransferagenzien zur Herstellung von Oligomeren aus olefinisch ungesättigten Monomeren durch Radikalpolymerisation. WO-A-87/03605 beansprucht andererseits die Verwendung von bestimmten Kobalt(II)-Chelatkomplexen für diesen Zweck wie auch die Verwendung von bestimmten Chelatkomplexen anderer Metalle wie z. B. Iridium und Rhenium.

Die Metall-Chelatkomplexe, die in diesen Literaturstellen offenbart sind, wie auch die speziellen Polymerisationstechniken, die darin zur Durchführung der katalytischen Kettentransferpolymerisation offenbart sind, werden hier durch diesen Hinweis aufgenommen.

Bevorzugt umfasst in der erfindungsgemäßen Polymerisat-Dispersion die 2. Zusammensetzung

A1) mindestens einen (Meth)acrylsäure(cyclo)alkylester und/oder einen Vinylaromaten, und

B) mindestens einen anionischen copolymerisierbaren Emulgator.

Besonders bevorzugt ist als A1) in der 2. Zusammensetzung 2-Ethylhexylacrylat, n-Hexylacrylat, n-Octylacrylat, 3-Propylheptylacrylat und/oder Styrol.

Bevorzugt ist in der erfindungsgemäßen Polymerisat-Dispersion der mindestens eine anionische copolymerisierbare Emulgator ausgewählt ist aus der Gruppe bestehend

(1) einer Verbindung gemäß Formel (I)

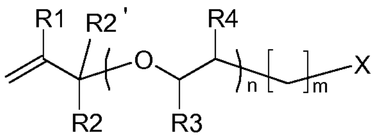

(I)

mit der Bedeutung

R1 : H, Alkyl, Cycloalkyl, Aralkyl, Aryl oder Alkoxyaryl,
R2, R2' = H oder R2 und R2' = O,
R3 : H oder Alkyl,
R4 : H oder OH,
X : $SO_3^-$, $HPO_4^-$, $PO_4^{2-}$ oder $COO^-$,
m: 0 oder 1,
n: eine ganze Zahl zwischen 0 und 1000, insbesondere zwischen 1 und 1000;

(2) einer Verbindung gemäß Formel (II)

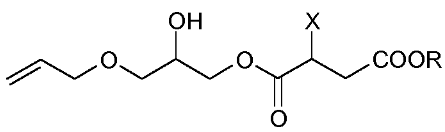

(II)

mit der Bedeutung

X : $SO_3^-$, $PO_4^{2-}$ oder $SO_4^-$;
R: H, Alkyl, Cycloalkyl, Aralkyl, Aryl oder Alkoxyaryl;

(3) einer Verbindung der Formel (III)

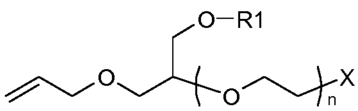

(III)

mit der Bedeutung

R1 : H, Alkyl, Cycloalkyl, Aralkyl, Aryl oder Alkoxyaryl,
X : $SO_4^-$, $SO_3^-$, $HPO_4^-$, $PO_4^{2-}$ oder $COO^-$,
n: eine ganze Zahl zwischen 0 und 1000, insbesondere zwischen 1 und 1000;

(4) einer Verbindung der Formel (IV)

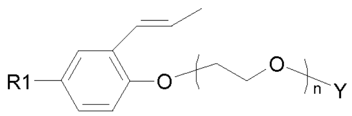

(IV)

mit der Bedeutung

R1 : H, Alkyl, Cycloalkyl, Aralkyl, Aryl oder Alkoxyaryl, und
Y : $SO_3^-$, $PHO_3^-$ oder $PO_3^{2-}$,
n: eine ganze Zahl zwischen 0 und 1000, insbesondere zwischen 1 und 1000;

oder Mischungen aus den Verbindungen der Formeln (I) bis (IV).

Die anionischen copolymerisierbaren Emulgatoren können neutralisiert vorliegen. Bevorzugt liegt als Gegenion für die anionischen Gruppen X und/oder Y, ein Kation ausgewählt aus der Gruppe $H^+$, $Li^+$, $Na^+$, $K^+$, $Ca^{2+}$, $NH_4^+$ oder Mischungen daraus, vor.

Bevorzugt ist das Kation $NH_4^+$ oder $Na^+$.

"Alkyl" bedeutet eine gesättigte aliphatische Kohlenwasserstoffgruppe, die geradkettig oder verzweigt sein kann und von 1 bis 20 Kohlenstoffatome in der Kette haben kann. Bevorzugte Alkylgruppen können geradkettig oder verzweigt sein und von 1 bis zu 10 Kohlenstoffatome in der Kette aufweisen. Verzweigt bedeutet, dass eine Nieder-Alkylgruppe, wie Methyl, Ethyl oder Propyl, an eine lineare Alkylkette angebracht ist. Bei Alkyl handelt es sich beispielsweise um Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl, 1-Tetradecyl, 1-Hexadecyl und 1-Octadecyl.

"Cycloalkyl" bedeutet einen aliphatischen Ring, der von 3 bis 10 Kohlenstoffatome in dem Ring hat. Bevorzugte Cycloalkylgruppen haben von 4 bis ungefähr 7 Kohlenstoffatome in dem Ring.

"Aryl" bedeutet Phenyl oder Naphthyl. "Aralkyl" bedeutet eine Alkylgruppe, die mit einem Arylrest substituiert ist. "Substituiertes Aralkyl" und "substituiertes Aryl" bedeutet, dass die Arylgruppe oder die Arylgruppe der Aralkylgruppe mit einem oder mehreren Substituenten ausgewählt aus Alkyl, Alkoxy, Nitro, Carboalkoxy, Cyano, Halo, Alkylmercaptyl, Trihaloalkyl oder Carboxyalkyl substituiert ist.

"Alkoxy" bedeutet eine Alkyl-O-Gruppe, in der "Alkyl" die vorstehend beschriebene Bedeutung hat. Nieder-Alkoxy-Gruppen sind bevorzugt. Als beispielhafte Gruppen sind Methoxy, Ethoxy, n-Propoxy, i-Propoxy und n-Butoxy einbezogen.

"Nieder-Alkyl" bedeutet eine Alkylgruppe, die 1 bis ungefähr 7 Kohlenstoffatome aufweist.

"Alkoxyaryl" bedeutet eine Arylgruppe wie vorstehend beschrieben, die mit einer Alkoxygruppe, wie vorstehend beschrieben, substituiert ist.

"Halogen" (oder "halo") bedeutet Chlor (chloro), Fluor (fluoro), Brom (bromo) oder Iod (iodo).

Besonders bevorzugt ist der anionische copolymerisierbare Emulgator ausgewählt ist aus der Gruppe bestehend aus

(1) einer Verbindung gemäß Formel (I)

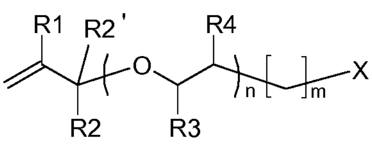

(I)

mit der Bedeutung

R1 : H oder Alkyl,
R2, R2' = H oder R2 und R2' = O
R3: H
R4 : H oder OH,
X : $SO_3^-$, $HPO_4^-$, $PO_4^{2-}$,
m: 0 oder 1,
n: eine ganze Zahl zwischen 1 und 1000, bevorzugt 1 bis 500, ganz besonders bevorzugt 4 bis 50;

(2) einer Verbindung gemäß Formel (II)

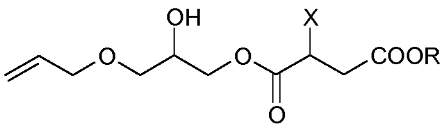
(II)

mit der Bedeutung

X : $SO_3^-$, $HPO_4^-$, $PO_4^{2-}$
R: H oder Alkyl;

(3) einer Verbindung der Formel (III)

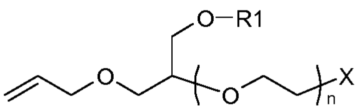
(III)

mit der Bedeutung

R1 : H,
X : $SO_4^-$,
n: eine ganze Zahl zwischen 1 und 1000, bevorzugt 1 bis 500, ganz besonders bevorzugt 4 bis 50;

(4) einer Verbindung der Formel (IV)

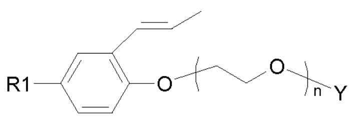
(IV)

mit der Bedeutung

R1 : H oder Alkyl,
Y: $SO_3^-$,
n: eine ganze Zahl zwischen 1 und 1000, bevorzugt 1 bis 500, ganz besonders bevorzugt 4 bis 50.

Vorzugsweise kann der anionische copolymerisierbare Emulgator eine Verbindung gemäß Formel (III) sein

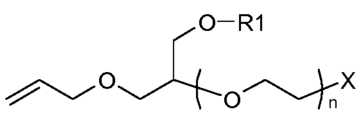
(III)

mit der Bedeutung

R1 : H,
X : $SO_4^-$,

n: eine ganze Zahl zwischen 1 und 1000, bevorzugt 1 bis 250, ganz besonders bevorzugt 4 bis 50.

Vorzugsweise kann der anionische copolymerisierbare Emulgator eine Verbindung gemäß Formel (IV) sein

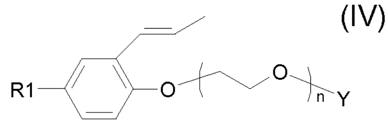

(IV)

mit der Bedeutung

R1 : H oder Alkyl,
Y: $SO_3^-$,
n: eine ganze Zahl zwischen 1 und 1000, bevorzugt 1 bis 500, ganz besonders bevorzugt 4 bis 50.

Die in der erfindungsgemäßen Polymerisat-Dispersion verwendeten copolymerisierbaren Emulgatoren der Formel (I) werden auch als Phosphatester von Polyethylenglycol-Monoacrylaten bezeichnet. Ebenfalls können die copolymerisierbaren Emulgatoren der Formel (I) auch als Phosponatester von Polyethylenglycol-Monoacrylaten oder Allylethersulfate bezeichnet werden. Kommerziell erhältliche copolymerisierbaren Emulgatoren der Formel (I) sind Maxemul®- oder Sipomer®-PAM Emulgatoren.

Die in der erfindungsgemäßen Polymerisat-Dispersion verwendeten copolymerisierbaren Emulgatoren der Formel (II) werden auch als Polyoxyalkylenalkenylethersulfate bezeichnet. Kommerziell erhältliche copolymerisierbaren Emulgatoren der Formel (II) sind Latemul®-PD Emulagatoren.

Die in der erfindungsgemäßen Polymerisat-Dispersion verwendeten copolymerisierbaren Emulgatoren der Formel (III) werden auch als verzweigte ungesättigte Alkylalkoxysulfonate oder Alkylalkoxysulfate bezeichnet. Kommerziell erhältliche copolymerisierbare Emulgatoren der Formel (III) sind Adeka® Reasoap Emulgatoren.

Die in der erfindungsgemäßen Polymerisat-Dispersion verwendeten copolymerisierbaren Emulgatoren der Formel (IV) werden auch als Natrium- oder Ammoniumsalze der Polyoxyethylenalkylphenylether bezeichnet. Kommerziell erhältliche copolymerisierbare Emulgatoren der Formel (IV) sind Hitenol® BC Emulgatoren.

Bevorzugt liegt in der erfindungsgemäßen Polymerisat-Dispersion die Teilchengröße des Polymerisats A und/oder des Polymerisats B in einem Bereich von 1 nm bis 100 nm, insbesondere in einem Bereich von 5 nm bis 75 nm und ganz besonders bevorzugt in einem Bereich von 35 bis 50 nm. Die Teilchengröße des erfindungsgemäßen Polymerisats wurde mittels der hydrodynamischen Chromatographie (HDC) bestimmt.

Bevorzugt umfasst in der erfindungsgemäßen Polymerisat-Dispersion die 1. Zusammensetzung

A1) 40-94 Gew.-% mindestens eines (Meth)acrylsäure(cyclo)alkylesters,

A2) 1-15 Gew.-% mindestens einer $\alpha,\beta$-ethylenisch ungesättigten Carbonsäure,

A3) 5-45 Gew.-% mindestens einer Verbindung ausgewählt aus der Gruppe bestehend aus (Meth)-acrylsäure 2-(2-oxo-imidazolidin-1-yl)-ethyl ester, 2-Ureidoethyl(meth)acrylat (UMA), Acetoacetoxyethylacrylat, Acetoacetoxypropyl methacrylat, Acetoacetoxybutyl methacrylat, 2-(Acetoacetoxy) ethyl methacrylat, Diacetonacrylamid (DAAM), Diacetonmethacrylamid oder Mischungen daraus,

wobei die Mengenangaben von A1) bis A3) jeweils auf 100 Gew.-% der in der 1. Zusammensetzung zu polymerisierenden Monomere bezogen sind.

Der Ausdruck "wobei die Mengenangabe von jeweils auf 100 Gew.-% der in der 1. Zusammensetzung zu polymerisierenden Monomere bezogen sind" ist gleichzusetzen mit ", wobei sich die Gewichtsanteile auf jeweils 100 Gew.-% aufsummieren". Mit anderen Worten bedeutet dies, dass A1) bis A3) sich auf insgesamt 100 Gew.-% addieren. Entsprechend gilt dies auch für A1) bis B).

Bevorzugt umfasst in der erfindungsgemäßen Polymerisat-Dispersion die 1. Zusammensetzung

A1) 40-93,9 Gew.-% mindestens eines (Meth)acrylsäure(cyclo)alkylesters,

A2) 1-15 Gew.-% mindestens einer $\alpha,\beta$-ethylenisch ungesättigten Carbonsäure,

A3) 5-20 Gew.-% mindestens einer Verbindung ausgewählt aus der Gruppe bestehend aus (Meth)- acrylsäure 2-(2-oxo-imidazolidin-1-yl)-ethylester, 2-Ureidoethyl(meth)acrylat (UMA), Acetoacetoxyethyl acrylat, Acetoacetoxypropylmethacrylat, Acetoacetoxybutylmethacrylat, 2-(Acetoacetoxy)ethylmethacrylat, Diacetonacrylamid (DAAM), Diacetonmethacrylamid oder Mischungen daraus,

A4) 0-5 Gew.-% Molekulargewichtsregler, und

B) 0,05-5 Gew.-% mindestens eines anionischen copolymerisierbaren Emulgators,

wobei die Mengenangaben von A1) bis B) jeweils auf 100 Gew.-% der in der 1. Zusammensetzung zu polymerisierenden Monomere bezogen sind.

Bevorzugt umfasst in der erfindungsgemäßen Polymerisat-Dispersion die 2. Zusammensetzung

A1) 85-99,9 Gew.-% mindestens eines (Meth)acrylsäure(cyclo)alkylesters, und

B) 0,05-5 Gew.-% mindestens einen anionisches copolymerisierbaren Emulgators, wobei die Mengenangaben von A1) bis B) jeweils auf 100 Gew.-% der in der 2. Zusammensetzung zu polymerisierenden Monomere bezogen sind.

Bevorzugt ist die erfindungsgemäße Polymerisat-Dispersion frei von nicht polymerisierbaren Emulgatoren.

Araliphatische oder aliphatische nichtionische Emulgatoren sind, beispielsweise ethoxylierte Mono-, Di- und Trialkylphenole (EO-Grad: 3 bis 50, Alkylrest: C4-C10), Ethoxylate langkettiger Alkohole (EO-Grad: 3 bis 100, Alkylrest: C8-C36) sowie Polyethylenoxid/Polypropylenoxid-Homo- und Copolymere. Diese können die Alkylenoxideinheiten statistisch verteilt oder in Form von Blöcken einpolymerisiert enthalten. z. B. EO/PO-Blockcopolymere.

Anionische Emulgatoren sind beispielsweise Alkali- und Ammoniumsalze von Alkylsulfaten (Alkylrest: C8-C22), von Schwefelsäurehalbestern ethoxylierter Alkanole (EO-Grad: 2 bis 50, Alkylrest: C12-C18) und ethoxylierter Alkylphenole (EO-Grad: 3 bis 50, Alkylrest: C4-C9), von Alkylsulfonsäuren (Alkylrest: C12-C18) und von Alkylarylsulfonsäuren (Alkylrest: C9-C18). Weitere Emulgatoren finden sich in Houben-Weyl, Methoden der organischen Chemie, Band XIV/1, Makromolekulare Stoffe, Georg-Thieme-Verlag, Stuttgart, 1961, S. 192-208). Als anionische Emulgatoren gelten ebenfalls Bis(phenylsulfonsäure)ether bzw. deren Alkali- oder Ammoniumsalze, die an einem oder beiden aromatischen Ringen eine C4-C24-Alkylgruppe tragen. Diese Verbindungen sind allgemein bekannt, z. B. aus der US-A-4,269,749, und im Handel erhältlich, beispielsweise als Dowfax® 2A1 (Dow Chemical Company).

Kationische Emulgatoren sind vorzugsweise quartäre Ammoniumhalogenide, z. B. Trimethylcetylammoniumchlorid, Methyltrioctylammoniumchlorid, Benzyltriethylammoniumchlorid oder quartäre Verbindungen von N-C6-C20-Alkylpyridinen, -morpholinen oder -imidazolen, z. B. N-Laurylpyridiniumchlorid.

Ein weiterer Gegenstand der Erfindung ist ein Verfahren zur Herstellung der erfindungsgemäßen Polymerisat-Dispersion, wobei
mindestens eine zweistufige Emulsionspolymerisation durchgeführt wird, umfassend die Schritte:

1) Herstellung eines Polymerisats A durch eine radikalische Polymerisation aus einer 1. Zusammensetzung, umfassend

A) mindestens ein Monomer,

B) mindestens einen anionischen copolymerisierbaren Emulgator,

2) Versetzen des unter 1) hergestellte Polymerisats A mit einer Base,

3) Herstellung eines Polymerisats B durch radikalische Polymerisation aus einer 2. Zusammensetzung in Gegenwart des unter 2) behandelten Polymerisates A, umfassend

A) mindestens ein Monomer,
B) mindestens einen anionischen copolymerisierbaren Emulgator.

In dem Verfahren kann mindestens eines der folgenden Monomere A1), A2) und/oder A3) als A) eingesetzt werden:

A1) (Meth)acrylsäure(cyclo)alkylester, Vinylaromat, radikalische polymerisierbare Verbindung, Vernetzer und/oder $\alpha,\beta$-ethylenisch ungesättigtes Carbonsäureamid.

Dies umfasst bevorzugt solche (Meth)acrylsäure(cyclo)alkylester, deren linearer, zyklischer und/oder verzweigter Alkylrest 1 bis 20 Kohlenstoffatome aufweist, besonders bevorzugt 1 bis 10, ganz besonders bevorzugt 1 bis 8 und insbesondere 1 bis 4 Kohlenstoffatome. Bei zyklischen Verbindungen weist der Alkylrest mindestens 3 Kohlenstoffatome auf.

Zu nennen als Beispiele für (Meth)acrylsäure(cyclo)alkylester sind (Meth)acrylsäuremethylester, Allyl(meth)acrylat, (Meth)acrylsäureethylester, (Meth)acrylsäure-n-propylester, (Meth)acrylsäure-n-butylester, (Meth)acrylsäure-iso-butylester, (Meth)acrylsäure-sek - butylester, (Meth)acrylsäure-tert-butylester, (Meth)acrylsäure-n-pentylester, (Meth)acrylsäure-iso-pentylester, (Meth)acrylsäure-2- methyl-butylester, (Meth)acrylsäureamylester, 2,3-Epoxypropylmethacrylat, (Meth)acrylsäure-n-hexylester, (Meth)acrylsäure-2-ethylbutylester, (Meth)acrylsäurepentylester, (Meth)acrylsäure-n-heptylester, (Meth)acrylsäure-n-octylester, (Meth)acrylsäure-2-ethylhexylester (2-Ethylhexylacrylat), (Meth)acrylsäure-2-propylheptylester, (Meth)acrylsäure-n-decylester, (Meth)acrylsäureundecylester und (Meth)acrylsäure-n-dodecylester und (Meth)acrylsäure-cyclo-hexylester.

Bevorzugt sind Methylmethacrylat, Methylacrylat, Ethylacrylat, n-Butylacrylat, n-Butylmethacrylat, n-Hexylacrylat, n-Octylacrylat, 2-Ethylhexylacrylat, Allylmethacrylat, Allylacrylat, 2,3-Epoxypropyl(meth)acrylat und 3-Propylheptylacrylat oder Mischungen davon.

Bevorzugt umfasst sind Vinylaromaten mit bis zu 20 C-Atomen.

Als vinylaromatische Verbindungen kommen Vinyltoluol, Vinylnaphthalin, α- und p-Methylstyrol, α-Butylstyrol, 4-n-Butylstyrol, 4-n-Decylstyrol und vorzugsweise Styrol und α-Methylstyrol in Betracht.

Die mindestens eine radikalisch polymerisierbare Verbindung ist ausgewählt aus der Gruppe bestehend aus ethylenisch ungesättigten Nitrilen mit bis zu 20 C-Atomen, Vinylestern von bis zu 20 C-Atome enthaltenden Carbonsäuren, Vinylhalogeniden mit bis zu 10 C-Atomen und Vinylethern von 1 bis 10 C-Atome enthaltenden Alkoholen oder Mischungen daraus.

Beispiele für ethylenisch ungesättigte Nitrile sind Fumarsäuredinitril, Acrylnitril und Methacrylnitril, bevorzugt Acrylnitril und Methacrylnitril und besonders bevorzugt Acrylnitril. Vinylester von Carbonsäuren mit 1 bis 20 C-Atomen sind z.B. Vinyllaurat, Vinylstearat, Vinylpropionat, Versaticsäurevinylester, Vinylbutyrat und Vinylacetat, bevorzugt Vinylacetat. Die Vinylhalogenide sind mit Chlor, Fluor oder Brom substituierte ethylenisch ungesättigte Verbindungen, bevorzugt Vinylchlorid und Vinylidenchlorid.

Vernetzer sind Verbindungen, die mindestens zwei radikalisch polymerisierbare Doppelbindungen aufweisen, bevorzugt 2 bis 6, besonders bevorzugt 2 bis 4, ganz besonders bevorzugt 2 bis 3 und insbesondere genau 2.

Als Beispiele genannt seien für Di- und Poly(meth)acrylate 1,2-, 1,3- und 1,4-Butandioldiacrylat, 1,2- und 1,3-Propylenglykol(meth)acrylat, 1,6-Hexandioldi(meth)acrylat, 1,2-Ethylenglykoldi(meth)acrylat, Neopentylglykoldi(meth)acrylat, Diethylenglykoldi(meth)-acrylat, Triethylenglykoldi(meth)acrylat, Tetraethylenglykoldi(meth)acrylat, Trimethylol-propan-tri(meth)acrylat, Trimethylolethantri(meth)acrylat, Pentaerythritoltri- und -tetra(meth)acrylat.

Ferner erwähnt sei Divinylbenzol und Allyl(meth)acrylat.

Das α,β-ethylenisch ungesättigte Carbonsäureamid ist ausgewählt aus der Gruppe bestehend aus (Meth)acrylsäureamid, Crotonsäureamid, Amiden von Dicarbonsäuren oder Mischungen daraus. Besonders bevorzugt ist Itaconsäurediamid, Maleinsäurediamid oder Fumarsäurediamid, insbesondere bevorzugt sind Methacrylsäureamid und Acrylsäureamid.

Insbesondere sind auch Mischungen der (Meth)acrylsäure(cyclo)alkylester, Vinylaromaten, radikalisch polymerisierbaren Verbindungen, Vernetzer und/oder α,β-ethylenisch ungesättigte Carbonsäureamide geeignet.

A2) mindestens eine α,β-ethylenisch ungesättigte Carbonsäure

Dabei handelt es sich um 3 bis 10, bevorzugt 3 bis 6, besonders bevorzugt 3 bis 4 Kohlenstoffatome aufweisende a, β-ethylenisch ungesättigten Carbonsäuren. Optional können die ionischen Gruppen auch latent vorhanden sein, wie beispielsweise in Maleinsäureanhydrid, wo die säure Funktionalität in der Form einer Anhydridgruppe vorhanden ist.

Bevorzugt sind (Meth)acrylsäure, Crotonsäure oder Dicarbonsäuren, z.B. Itaconsäure, Maleinsäure oder Fumarsäure, besonders bevorzugt Methacrylsäure und Acrylsäure, oder auch Mischungen davon.

(Meth)Acryl(säure) steht in dieser Beschreibung für Methacryl(säure) und Acryl(säure).

Die Verbindungen A3) sind ausgewählt aus der Gruppe bestehend aus (Meth)- acrylsäure 2-(2-oxo-imidazolidin-1 -yl)-ethyl ester, 2-Ureidoethyl(meth)acrylat (UMA), Acetoacetoxyethyl acrylat, Acetoacetoxypropyl methacrylat, Acetoacetoxybutyl methacrylat, 2-(Acetoacetoxy) ethyl methacrylat (AAEMA), Diacetonacrylamid (DAAM), Diacetonmethacrylamid oder Mischungen daraus.

Bevorzugt ist ein erfindungsgemäßes Verfahren zur Herstellung einer Polymerisat-Dispersion, wobei mindestens eine zweistufige Emulsionspolymerisation durchgeführt wird, umfassend die Schritte:

1) Herstellung eines in Wasser dispergierten Polymerisats A in wässrigem Medium durch eine radikalische Polymerisation aus einer ersten Zusammensetzung, wobei die erste Zusammensetzung

A1) mindestens einen (Meth)acrylsäure(cyclo)alkylester,

A2) mindestens eine α,β-ethylenisch ungesättigte Carbonsäure,

A3) mindestens eine Verbindung ausgewählt aus der Gruppe bestehend aus (Meth)-acrylsäure 2-(2-oxo-imidazolidin-1-yl)-ethylester, 2-Ureidoethyl(meth)acrylat (UMA), Acetoacetoxyethylacrylat, Acetoacetoxypropylmethacrylat, Acetoacetoxybutylmethacrylat, 2-(Acetoacetoxy)ethylmethacrylat, Diacetonacrylamid (DAAM), Diacetonmethacrylamid, oder Mischungen daraus, und

A4) mindestens einen Molekulargewichtsregler, und

B) mindestens einen anionischen copolymerisierbaren Emulgator umfasst,

2) Versetzen des unter 1) hergestellte Polymerisats A mit einer Base,

3) Herstellung eines Polymerisats B durch radikalische Polymerisation aus einer zweiten Zusammensetzung in Gegenwart des unter 2) behandelten Polymerisates A, wobei die zweite Zusammensetzung

A1) mindestens einen (Meth)acrylsäure(cyclo)ester, und

B) mindestens einen anionischen copolymerisierbaren Emulgator umfasst.

Als Monomer können die vorstehend unter A1) bis A3) genannten Verbindungen verwendet werden.

Bevorzugt ist ein erfindungsgemäßes Verfahren zur Herstellung einer Polymerisat-Dispersion, wobei der mindestens eine anionische copolymerisierbare Emulgator ausgewählt ist aus der Gruppe bestehend

(1) einer Verbindung gemäß Formel (I)

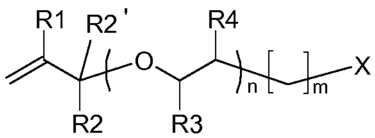

(I)

mit der Bedeutung

R1 : H, Alkyl, Cycloalkyl, Aralkyl, Aryl oder Alkoxyaryl,
R2, R2' = H oder R2 und R2' = O
R3 : H oder Alkyl,
R4 : H oder OH,
X : $SO_3^-$, $HPO_4^-$, $PO_4^{2-}$ oder $COO^-$,
m: 0 oder 1
n: eine ganze Zahl zwischen 1 und 1000; bevorzugt 1 bis 500, ganz besonders bevorzugt 4 bis 50;

(2) einer Verbindung gemäß Formel (II)

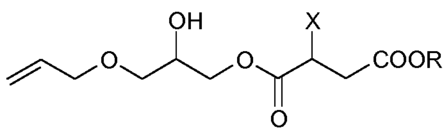

(II)

mit der Bedeutung

X : $SO_3^-$, $PO_4^{2-}$ oder $SO_4^-$;
R: H, Alkyl, Cycloalkyl, Aralkyl, Aryl oder Alkoxyaryl;

(3) einer Verbindung der Formel (III)

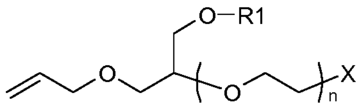

(III)

mit der Bedeutung

R1: H, Alkyl, Cycloalkyl, Aralkyl, Aryl oder Alkoxyaryl,
X: $SO_4^-$, $SO_3^-$, $HPO_4^-$, $PO_4^{2-}$ oder $COO^-$,
n: eine ganze Zahl zwischen 1 und 1000; bevorzugt 1 bis 500, ganz besonders bevorzugt 4 bis 50;

(4) einer Verbindung der Formel (IV)

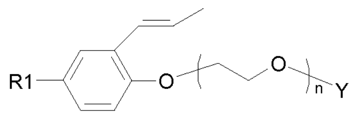

(IV)

mit der Bedeutung

R1: H, Alkyl, Cycloalkyl, Aralkyl, Aryl oder Alkoxyaryl, und
Y: $SO_3^-$, $PHO_3^-$ oder $PO_3^{2-}$,
n: eine ganze Zahl zwischen 1 und 1000; bevorzugt 1 bis 500, ganz besonders bevorzugt 4 bis 50;

oder Mischungen aus den Verbindungen der Formeln (I) bis (IV).

Bevorzugt eingesetzte Reste R1, R2, R3, X und Y sowie m und n sind vorstehend genannt.

Ein weiterer Gegenstand der Erfindung betrifft Beschichtungsmittel in Form einer wässrigen Zusammensetzung, enthaltend

i) wenigstens eine erfindungsgemäße Polymerisat-Dispersion,

ii) gegebenenfalls wenigstens einen (an)organischen Füllstoff und/oder ein (an)organisches Pigment,

iii) gegebenenfalls ein Additiv,

iv) Wasser.

Das erfindungsgemäße Beschichtungsmittel kommt vorzugsweise in wässrigen Anstrichmitteln zum Einsatz. Diese Anstrichmittel liegen beispielsweise in Form eines unpigmentierten Systems (Klarlacks) oder eines pigmentierten Systems vor. Der Anteil der Pigmente kann durch die Pigmentvolumenkonzentration (PVK) beschrieben werden. Die PVK beschreibt das Verhältnis des Volumens an Pigmenten ($V_p$) und Füllstoffen ($V_F$) zum Gesamtvolumen, bestehend aus den Volumina an Bindemittel ($V_B$), Pigmenten und Füllstoffen eines getrockneten Beschichtungsfilms in Prozent: $PVK = (V_P + V_F) \times 100 / (V_P + V_F + V_B)$. Anstrichmittel lassen sich anhand der PVK beispielsweise wie folgt einteilen:

hochgefüllte Innenfarbe, waschbeständig, weiß/matt ca. 85
Innenfarbe, scheuerbeständig, weiß/matt ca. 80
Halbglanzfarbe, seidenmatt ca. 35
Halbglanzfarbe, seidenglänzend ca. 25
Hochglanzfarbe ca. 15-25
Außenfassadenfarbe, weiß ca. 45-55
Klarlack < 5

Diese Dispersionen werden bevorzugt eingesetzt in PVK<50, besonders bevorzugt PVK<35 und noch stärker bevorzugt in niedrig gefüllten Systemen (PVK<23) und Klarlacken (PVK<5).

Geeignete Füllstoffe in Klarlacksystemen sind z. B. Mattierungsmittel, die so gewünscht den Glanz stark beeinträchtigen. Mattierungsmittel sind in der Regel transparent und können sowohl organisch als auch anorganisch sein.

Anorganische Füllstoffe auf Basis von Silika sind am besten geeignet und sind weit verbreitet im Handel erhältlich. Beispiele sind die Syloid®-Marken von W.R. Grace & Company und die Acematt®-Marken von der Fa. Evonik GmbH. Organische Mattierungsmittel sind z.B. erhältlich von der Fa. BYK-Chemie GmbH unter die Ceraflour®- und die Ceramat®-Marken, von der Fa. Deuteron GmbH unter die Deuteron MK®-Marke. Andere geeignete Füllstoffe für Dispersionsfarben sind Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. In Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Glänzende Anstrichmittel weisen in der Regel nur geringe Mengen sehr feinteiliger Füllstoffe auf oder enthalten keine Füllstoffe.

Feinteilige Füllstoffe können auch zur Erhöhung der Deckkraft und/oder zur Einsparung von Weißpigmenten eingesetzt werden. Zur Einstellung der Deckkraft, des Farbtons und der Farbtiefe werden vorzugsweise Abmischungen aus Farbpigmenten und Füllstoffen eingesetzt.

Geeignete Pigmente sind beispielsweise anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon und Metallkomplex-Pigmente enthalten. Geeignet sind auch synthetische Weißpigmente mit Lufteinschlüssen zur Erhöhung der Lichtstreuung, wie die Ropaque®- und AQACell®-Dispersionen. Weiterhin geeignet sind die Luconyl®-Marken der Fa. BASF SE, wie z. B. das Luconyl®-Gelb, Luconyl®-Braun und Luconyl®-Rot, insbesondere die transparenten Varianten.

Das erfindungsgemäße Beschichtungsmittel, auch wässriges Anstrichmittel genannt, kann, neben der Polymerisat-Dispersion, gegebenenfalls zusätzliche, filmbildende Polymere, Pigmente und weitere Additive enthalten.

Zu den üblichen Additiven (Hilfsmitteln) zählen Netz- oder Dispergiermittel, wie Natrium-, Kalium- oder Ammoniumpolyphosphate, Alkalimetall und Ammoniumsalze von Acrylsäure oder Maleinsäureanhydrid-Copolymeren, Polyphosphonate, wie 1 -Hydroxyethan-1,1-diphosphonsaures Natrium sowie Naphthalinsulfonsäure-Salze, insbesondere deren Natriumsalze.

Wichtige Additive sind die Filmbilde-Hilfsmittel, die Verdicker und Entschäumer. Geeignete Filmbilde-Hilfsmittel sind z.B. Texanol® von der Fa. Eastman Chemicals und die Glykolether und -Ester z.B. im Handel erhältlich von BASF SE, unter den Namen Solvenon® und Lusolvan®, und von Dow unter den Handelsnamen Dowanol®. Die Menge beträgt vorzugsweise < 10 Gew.-% und besonders bevorzugt < 5 Gew.-% auf Gesamtformulierung. Es ist auch möglich, völlig ohne Lösemittel zu formulieren.

Weitere geeignete Additive sind Verlaufsmittel, Entschäumer, Biozide und Verdicker. Geeignete Verdicker sind z. B. Assoziativ-Verdicker, wie Polyurethan-Verdicker. Die Menge des Verdickers beträgt vorzugsweise weniger als 2,5 Gew.-%, besonders bevorzugt weniger als 1 ,5 Gew.-% Verdicker, bezogen auf Feststoffgehalt des Anstrichmittels. Weitere Formulierungshinweise für Holzanstriche sind ausführlich beschrieben in "water-based acrylates for decorative coatings" von den Autoren M. Schwartz und R. Baumstark, ISBN 3-87870-726-6.

Ein weiterer Gegenstand der vorliegenden Erfindung ist die Verwendung der erfindungsgemäßen Polymerisat-Dispersion für Beschichtungsmassen.

Ein weiterer Gegenstand der vorliegenden Erfindung ist die Verwendung der erfindungsgemäßen Polymerisat-Dispersion für Anstrichmittel.

Die Herstellung der erfindungsgemäßen Anstrichmittel erfolgt in bekannter Weise durch Abmischen der Komponenten in hierfür üblichen Mischvorrichtungen. Es hat sich bewährt, aus den Pigmenten, Wasser und gegebenenfalls den Additiven eine wässrige Paste oder Dispersion zu bereiten, und anschließend erst das polymere Bindemittel, d. h. in der Regel die wässrige Dispersion des Polymeren, mit der Pigmentpaste bzw. Pigmentdispersion zu vermischen.

Das erfindungsgemäße Anstrichmittel kann in üblicher Weise auf Substrate aufgebracht werden, z. B. durch Streichen, Spritzen, Tauchen, Rollen, Rakeln.

Die erfindungsgemäßen Anstrichmittel zeichnen sich aus durch einfache Handhabung und gute Verarbeitungseigenschaften. Die Anstrichmittel sind schadstoffarm. Sie haben gute anwendungstechnische Eigenschaften, z. B. eine gute Wasserfestigkeit, gute Nasshaftung, und gute Blockfestigkeit, eine gute Überstreichbarkeit, und sie zeigen beim Auftragen einen guten Verlauf. Das verwendete Arbeitsgerät lässt sich leicht mit Wasser reinigen.

Alle vorstehend aufgeführten Ausführungsformen und bevorzugten Ausführungsformen sind frei miteinander kombinierbar, sofern der Kontext nicht eindeutig dagegen spricht.

Insbesondere umfasst der Ausdruck "umfassend", oder der Ausdruck "umfasst" die Ausdrücke "bestehend" oder "bestehend aus".

Weitere Vorteile und vorteilhafte Ausgestaltungen der erfindungsgemäßen Gegenstände werden durch die

Figur 1 veranschaulicht und in der nachfolgenden Beschreibung erläutert. Dabei ist zu beachten, dass die Zeichnung nur beschreibenden Charakter hat und nicht dazu gedacht ist, die Erfindung in irgendeiner Form einzuschränken. Es zeigt:

Figur 1: Nasse Aufzüge auf eine Leneta-Folie von der erfindungsgemäßen Formulierung.

Die Figur 1 zeigt fünf verschiedene nasse Aufzüge auf eine Laneta-Folie der erfindungsgemäßen Formulierung, enthaltend Acrylat-Verdicker und die erfindungsgemäßen Polymerisatdispersionen B1 bis B3 im Vergleich zu Bindemitteln aus WO 2012/130712-A1 (VB1 und VB2). Es ist zu erkennen, dass die Formulierungen basierend auf den erfindungsgemäßen Polymerisat-Dispersionen Nasstransparenz aufweisen.

Die Erfindung wird durch die nachfolgenden Bespiele näher erläutert.

**Beispiel 1 (B1)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 732,6 g | entionisiertes Wasser und |
| 18,5 g | Adeka Reasoap SR-1025 (25 Gew.-% wässrige Lösung) |

vorgelegt und unter Rühren auf 80°C aufgeheizt. Bei Erreichung dieser Temperatur wurde der gesamte Zulauf 1 zugegeben und es wurde 2 Minuten gerührt. Danach wurde Zulauf 2 gestartet und innerhalb von 45 Minuten dosiert. Nach Ende von Zulauf 2 wurde 10 min nachpolymerisiert, dann Zulauf 3 zugegeben und 10 min eingerührt. Anschließend wurde Zulauf 4 gestartet. Nachdem 50% dieses Zulaufs in 45 min dosiert wurde, wurde diese gestoppt, Zulauf 5 zugegeben und 10 min eingerührt. Dann wurde die Restmenge von Zulauf 4 und parallel dazu Zulauf 6 innerhalb von 45 Minuten dosiert.
Zulauf 1 (homogene Lösung aus):

| | |
|---|---|
| 55,8 g | entionisiertem Wasser und |
| 4,2 g | Natriumperoxodisulfat |

Zulauf 2 (homogene Mischung aus):

| | |
|---|---|
| 196,1 g | entionisiertem Wasser |
| 6,2 g | Adeka Reasoap SR-1025 (25 Gew.-% wässrige Lösung) |
| 45,5 g | Methacrylsäure |
| 18,2 g | einer 25 gew.-%igen Lösung von Ureidoethylmethacrylat in Methylmethacrylat |
| 300,3 g | Methylmethacrylat |
| 45,5 g | n-Butylacrylat |
| 227,5 g | einer 20 gew.-%igen wässrigen Lösung von Diacetonacrylamid und |
| 22,8 g | 2-Ethylhexylthioglykolat |

Zulauf 3:

27,0 g einer 25 gew.-%igen Ammoniaklösung

Zulauf 4 (homogene Mischung aus):

| | |
|---|---|
| 396,1 g | entionisiertem Wasser |
| 10,6 g | Adeka Reasoap SR-1025 (25 Gew.-% wässrige Lösung) |
| 280,0 g | n-Butylacrylat |
| 343,0 g | Methylmethacrylat und |
| 322,0 g | 2-Ethylhexylacrylat |

Zulauf 5:

9,0 g einer 25 gew.-%igen Ammoniaklösung

Zulauf 6 (homogene Lösung aus):

| | |
|---|---|
| 9,3 g | entionisiertem Wasser und |
| 0,7 g | Natriumperoxodisulfat |

Nach Beendigung des Zulaufs 4 und 6 ließ man das Polymerisationsgemisch noch 30 Minuten bei 80°C nachreagieren; dann wurde 167,2 g entionisiertem Wasser zugegeben und weiterhin 90 Minuten bei 80°C gerührt.

Anschließend wurde die erhaltene wässrige Polymerisatdispersion auf Raumtemperatur abgekühlt. Bei Raumtemperatur wurde noch 189,6 g einer 12 gew.-%igen wässrigen Lösung von Adipinsäuredihydrazid zugegeben. Zum Schluss wurde die Dispersion über ein 125 µm Filter filtriert.

Die erhaltene 3430,4 g der wässrigen Polymerisatdispersion wies einen Feststoffgehalt von 42,6 Gew.-% auf. Die MFT betrug ≤ 0°C. Die mit entionisiertem Wasser verdünnte wässrige Polymerisatdispersion hat einen gewichtsmittleren Teilchendurchmesser von 41 nm (gemessen mittels HDC).

**Beispiel 2 (B2)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 732,6 g | entionisiertes Wasser und |
| 18,5 g | Adeka Reasoap SR-1025 (25 Gew.-% wässrige Lösung) |

vorgelegt und unter Rühren auf 80°C aufgeheizt. Bei Erreichung dieser Temperatur wurde der gesamte Zulauf 1 zugegeben und es wurde 2 Minuten gerührt. Danach wurde Zulauf 2 gestartet und innerhalb von 45 Minuten dosiert. Nach Ende von Zulauf 2 wurde 10 min nachpolymerisiert, dann Zulauf 3 zugegeben und 10 min eingerührt. Anschließend wurde Zulauf 4 gestartet. Nachdem 50% dieses Zulaufs in 45 min dosiert wurde, wurde diese gestoppt, Zulauf 5 zugegeben und 10 min eingerührt. Dann wurde die Restmenge von Zulauf 4 und parallel dazu Zulauf 6 innerhalb von 45 Minuten dosiert.

Zulauf 1 (homogene Lösung aus):

| | |
|---|---|
| 55,8 g | entionisiertem Wasser und |
| 4,2 g | Natriumperoxodisulfat |

Zulauf 2 (homogene Mischung aus):

| | |
|---|---|
| 196,1 g | entionisiertem Wasser |
| 6,2 g | Adeka Reasoap SR-1025 (25 Gew.-% wässrige Lösung) |
| 45,5 g | Methacrylsäure |
| 18,2 g | einer 25 gew.-%igen Lösung von Ureidoethylmethacrylat in Methylmethacrylat |
| 300,3 g | Methylmethacrylat |
| 45,5 g | n-Butylacrylat |
| 227,5 g | einer 20 gew.-%igen wässrigen Lösung von Diacetonacrylamid und |
| 21,0 g | 2-Ethylhexylthioglykolat |

Zulauf 3:

27,0 g einer 25 gew.-%igen Ammoniaklösung

Zulauf 4 (homogene Mischung aus):

396,1 g entionisiertem Wasser

(fortgesetzt)

| | |
|---|---|
| 10,6 g | Adeka Reasoap SR-1025 (25 Gew.-% wässrige Lösung) |
| 280,0 g | n-Butylacrylat |
| 7,0 g | Allylmethacrylat |
| 336,0 g | Methylmethacrylat und |
| 322,0 g | 2-Ethylhexylacrylat |

Zulauf 5:

9,0 g einer 25 gew.-%igen Ammoniaklösung

Zulauf 6 (homogene Lösung aus):

| | |
|---|---|
| 9,3 g | entionisiertem Wasser und |
| 0,7 g | Natriumperoxodisulfat |

Nach Beendigung des Zulaufs 4 und 6 ließ man das Polymerisationsgemisch noch 30 Minuten bei 80°C nachreagieren; dann wurde 167,2 g entionisiertem Wasser zugegeben und weiterhin 90 Minuten bei 80°C gerührt.

Anschließend wurde die erhaltene wässrige Polymerisatdispersion auf Raumtemperatur abgekühlt. Bei Raumtemperatur wurde noch 189,6 g einer 12 gew.-%igen wässrigen Lösung von Adipinsäuredihydrazid zugegeben. Zum Schluss wurde die Dispersion über ein 125 μm Filter filtriert.

Die erhaltene 3425,9 g der wässrigen Polymerisatdispersion wies einen Feststoffgehalt von 42,5 Gew.-% auf. Die MFT betrug ≤ 0°C. Die mit entionisiertem Wasser verdünnte wässrige Polymerisatdispersion hat einen gewichtsmittleren Teilchendurchmesser von 40 nm (gemessen mittels HDC).

**Beispiel 3 (B3)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 732,6 g | entionisiertes Wasser und |
| 18,5 g | Adeka Reasoap SR-1025 (25 Gew.-% wässrige Lösung) |

vorgelegt und unter Rühren auf 80°C aufgeheizt. Bei Erreichung dieser Temperatur wurde der gesamte Zulauf 1 zugegeben und es wurde 2 Minuten gerührt. Danach wurde Zulauf 2 gestartet und innerhalb von 45 Minuten dosiert. Nach Ende von Zulauf 2 wurde 10 min nachpolymerisiert, dann Zulauf 3 zugegeben und 10 min eingerührt. Anschließend wurde Zulauf 4 gestartet. Nachdem 50% dieses Zulaufs in 45 min dosiert wurde, wurde diese gestoppt, Zulauf 5 zugegeben und 10 min eingerührt. Dann wurde die Restmenge von Zulauf 4 und parallel dazu Zulauf 6 innerhalb von 45 Minuten dosiert.
Zulauf 1 (homogene Lösung aus):

| | |
|---|---|
| 55,8 g | entionisiertem Wasser und |
| 4,2 g | Natriumperoxodisulfat |

Zulauf 2 (homogene Mischung aus):

| | |
|---|---|
| 196,1 g | entionisiertem Wasser |
| 6,2 g | Adeka Reasoap SR-1025 (25 Gew.-% wässrige Lösung) |
| 45,5 g | Methacrylsäure |
| 28,0 g | einer 25 gew.-%igen Lösung von Ureidoethylmethacrylat in Methylmethacrylat |
| 290,5 g | Methylmethacrylat |
| 45,5 g | n-Butylacrylat |

(fortgesetzt)

| | |
|---|---|
| 227,5 g | einer 20 gew.-%igen wässrigen Lösung von Diacetonacrylamid und |
| 21,0 g | 2-Ethylhexylthioglykolat |

Zulauf 3:

| | |
|---|---|
| 27,0 g | einer 25 gew.-%igen Ammoniaklösung |

Zulauf 4 (homogene Mischung aus):

| | |
|---|---|
| 396,1 g | entionisiertem Wasser |
| 10,6 g | Adeka Reasoap SR-1025 (25 Gew.-% wässrige Lösung) |
| 280,0 g | n-Butylacrylat |
| 343,0 g | Methylmethacrylat und |
| 322,0 g | 2-Ethylhexylacrylat |

Zulauf 5:

| | |
|---|---|
| 9,0 g | einer 25 gew.-%igen Ammoniaklösung |

Zulauf 6 (homogene Lösung aus):

| | |
|---|---|
| 9,3 g | entionisiertem Wasser und |
| 0,7 g | Natriumperoxodisulfat |

Nach Beendigung des Zulaufs 4 und 6 ließ man das Polymerisationsgemisch noch 30 Minuten bei 80°C nachreagieren; dann wurde 167,2 g entionisiertem Wasser zugegeben und weiterhin 90 Minuten bei 80°C gerührt.

Anschließend wurde die erhaltene wässrige Polymerisatdispersion auf Raumtemperatur abgekühlt. Bei Raumtemperatur wurde noch 189,6 g einer 12 gew.-%igen wässrigen Lösung von Adipinsäuredihydrazid zugegeben. Zum Schluss wurde die Dispersion über ein 125 µm Filter filtriert.

Die erhaltene 3425,9 g der wässrigen Polymerisatdispersion wies einen Feststoffgehalt von 42,5 Gew.-% auf. Die MFT betrug ≤ 0°C. Die mit entionisiertem Wasser verdünnte wässrige Polymerisatdispersion hat einen gewichtsmittleren Teilchendurchmesser von 40 nm (gemessen mittels HDC).

**Vergleichsbeispiel 1 (VB1)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 289,6 g | entionisiertes Wasser und |
| 32,0 g | einer 15 gew.-%igen wässrigen Lösung von Natriumlaurylsulfat |

vorgelegt und unter Rühren auf 80 °C aufgeheizt. Bei Erreichung dieser Temperatur wurde der gesamte Zulauf 1 zugegeben und es wurde 2 Minuten gerührt. Danach wurde Zulauf 2 gestartet und innerhalb von 40 Minuten zudosiert. Nach Ende von Zulauf 2 wurde 10 min nachpolymerisiert, dann 0,8 g einer 25 gew.-%igen wässrigen Lösung von Ammoniak zugegeben und 10 min eingerührt. Anschließend wurde Zulauf 3 gestartet und innerhalb von 90 Minuten mit gleichbleibendem Mengenstrom kontinuierlich zudosiert. 45 Minuten nach Anfang von Zulauf 3 wurde 0,8 g einer 25 gew.-%igen Ammoniaklösung zugegeben.
Zulauf 1 (homogene Lösung aus):

| | |
|---|---|
| 31,9 g | entionisiertem Wasser und |
| 2,4 g | Natriumperoxodisulfat |

Zulauf 2 (homogene Mischung aus):

| | |
|---|---|
| 60,1 g | entionisiertem Wasser |
| 4,0 g | einer 15 gew.-%igen wässrigen Lösung von Natriumlaurylsulfat |
| 7,2 g | Methacrylsäure |
| 54,0 g | einer 15 gew.-%igen wässrigen Lösung von Methacrylamid |
| 18,0 g | Styrol |
| 101,6 g | Methylmethacrylat |
| 21,0 g | n-Butylacrylat |
| 9,7 g | einer 25 gew.-%igen Lösung von Ureidoethylmethacrylat in Methylmethacrylat |
| 72,0 g | einer 20 gew.-%igen wässrigen Lösung von Diacetonacrylamid und |
| 2,9 g | 2-Ethylhexylthioglykolat |

Zulauf 3 (homogene Mischung aus):

| | |
|---|---|
| 175,3 g | entionisiertem Wasser |
| 8,0 g | einer 15 gew.-%igen wässrigen Lösung von Natriumlaurylsulfat |
| 288,0 g | n-Butylacrylat |
| 60,0 g | n-Butylmethacrylat und |
| 72,0 g | Methylmethacrylat |

Nach Beendigung des Zulaufs 3 ließ man das Polymerisationsgemisch noch 90 Minuten bei 80°C nachreagieren. Dann wurde 2,5 g einer 25 gew.-%igen Ammoniaklösung zugegeben und 15 Minuten eingerührt.

Anschließend wurde die erhaltene wässrige Polymerisatdispersion auf Raumtemperatur abgekühlt. Bei einer Temperatur unter 40°C wurde 60 g einer 12 gew.-%igen wässrigen Lösung von Adipinsäuredihydrazid zugegeben. Zum Schluss wurde die Dispersion über ein 125 μm Filter filtriert.

Die erhaltene 1373,8 g der wässrigen Polymerisatdispersion wies einen Feststoffgehalt von 43,6 Gew.-% auf. Die MFT betrug ≤ 0°C. Die mit entionisiertem Wasser verdünnte wässrige Polymerisatdispersion hat einen gewichtsmittleren Teilchendurchmesser von 67 nm.

Vergleichsbeispiel 2 (VB2)

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 701,3 g | entionisiertes Wasser und |
| 30,8 g | einer 15 gew.-%igen wässrigen Lösung von Natriumlaurylsulfat |

vorgelegt und unter Rühren auf 80°C aufgeheizt. Bei Erreichung dieser Temperatur wurde der gesamte Zulauf 1 zugegeben und es wurde 2 Minuten gerührt. Danach wurde Zulauf 2 gestartet und innerhalb von 40 Minuten zudosiert. Nach Ende von Zulauf 2 wurde 10 min nachpolymerisiert, dann 1,9 g einer 25 gew.-%igen wässrigen Lösung von Ammoniak zugegeben und 10 min eingerührt. Anschließend wurde Zulauf 3 gestartet und innerhalb von 90 Minuten mit gleichbleibendem Mengenstrom kontinuierlich zudosiert. 45 Minuten nach Anfang von Zulauf 3 wurde 1,9 g einer 25 gew.-%igen Ammoniaklösung zugegeben, und es wurde Zulauf 4 gestartet und parallel zu der Restmenge von Zulauf 3 mit gleichbleibendem Mengestrom kontinuierlich zudosiert.
Zulauf 1 (homogene Lösung aus):

| | |
|---|---|
| 65,1 g | entionisiertem Wasser und |
| 4,9 g | Natriumperoxodisulfat |

Zulauf 2 (homogene Mischung aus):

| | |
|---|---|
| 140,1 g | entionisiertem Wasser |
| 9,3 g | einer 15 gew.-%igen wässrigen Lösung von Natriumlaurylsulfat |

(fortgesetzt)

| | |
|---|---|
| 16,8 g | Methacrylsäure |
| 126,0 g | einer 15 gew.-%igen wässrigen Lösung von Methacrylamid |
| 42,0 g | Styrol |
| 237,2 g | Methylmethacrylat |
| 49,0 g | n-Butylacrylat |
| 22,5 g | einer 25 gew.-%igen Lösung von Ureidoethylmethacrylat in Methylmethacrylat |
| 168,0 g | einer 20 gew.-%igen wässrigen Lösung von Diacetonacrylamid und |
| 11,2 g | 2-Ethylhexylthioglykolat |

Zulauf 3 (homogene Mischung aus):

| | |
|---|---|
| 404,0 g | entionisiertem Wasser |
| 9,3 g | einer 15 gew.-%igen wässrigen Lösung von Natriumlaurylsulfat |
| 315,0 g | n-Butylacrylat |
| 266,0 g | 2-Ethylhexylacrylat |
| 140,0 g | n-Butylmethacrylat und |
| 259,0 g | Methylmethacrylat |

Zulauf 4 (homogene Lösung aus):

| | |
|---|---|
| 9,3 g | entionisiertem Wasser und |
| 0,7 g | Natriumperoxodisulfat |

Nach Beendigung des Zulaufs 3 und 4 ließ man das Polymerisationsgemisch noch 90 Minuten bei 80°C nachreagieren. Dann wurde 5,9 g einer 25 gew.-%igen Ammoniaklösung zugegeben und 15 Minuten eingerührt.

Anschließend wurde die erhaltene wässrige Polymerisatdispersion auf Raumtemperatur abgekühlt. Bei einer Temperatur unter 40°C wurde 140 g einer 12 gew.-%igen wässrigen Lösung von Adipinsäuredihydrazid zugegeben. Zum Schluss wurde die Dispersion über ein 125 µm Filter filtriert.

Die erhaltene 3177,2 g der wässrigen Polymerisatdispersion wies einen Feststoffgehalt von 42,8 Gew.-% auf. Die MFT betrug ≤ 0°C. Die mit entionisiertem Wasser verdünnte wässrige Polymerisatdispersion hat einen gewichtsmittleren Teilchendurchmesser von 77 nm.

**Vergleichsbeispiel 3 (VB3)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 721,0 g | entionisiertes Wasser und |
| 30,8 g | einer 15 gew.-%igen wässrigen Lösung von Natriumlaurylsulfat |

vorgelegt und unter Rühren auf 80°C aufgeheizt. Bei Erreichung dieser Temperatur wurde der gesamte Zulauf 1 zugegeben und es wurde 2 Minuten gerührt. Danach wurde Zulauf 2 gestartet und innerhalb von 45 Minuten dosiert. Nach Ende von Zulauf 2 wurde 10 min nachpolymerisiert, dann Zulauf 3 zugegeben und 10 min eingerührt. Anschließend wurde Zulauf 4 gestartet. Nachdem 50% dieses Zulaufs in 45 min dosiert wurde, wurde diese gestoppt, Zulauf 5 zugegeben und 10 min eingerührt. Dann wurde die Restmenge von Zulauf 4 und parallel dazu Zulauf 6 innerhalb von 45 Minuten dosiert.

Zulauf 1 (homogene Lösung aus):

| | |
|---|---|
| 55,8 g | entionisiertem Wasser und |
| 4,2 g | Natriumperoxodisulfat |

Zulauf 2 (homogene Mischung aus):

| | |
|---|---|
| 191,4 g | entionisiertem Wasser |
| 10,3 g | einer 15 gew.-%igen wässrigen Lösung von Natriumlaurylsulfat |
| 45,5 g | Methacrylsäure |
| 18,2 g | einer 25 gew.-%igen Lösung von Ureidoethylmethacrylat in Methylmethacrylat |
| 300,3 g | Methylmethacrylat |
| 45,5 g | n-Butylacrylat |
| 227,5 g | einer 20 gew.-%igen wässrigen Lösung von Diacetonacrylamid und |
| 22,8 g | 2-Ethylhexylthioglykolat |

Zulauf 3:

27,0 g einer 25 gew.-%igen Ammoniaklösung

Zulauf 4 (homogene Mischung aus):

| | |
|---|---|
| 388,9 g | entionisiertem Wasser |
| 17,7 g | einer 15 gew.-%igen wässrigen Lösung von Natriumlaurylsulfat |
| 280,0 g | n-Butylacrylat |
| 343,0 g | Methylmethacrylat und |
| 322,0 g | 2-Ethylhexylacrylat |

Zulauf 5:

9,0 g einer 25 gew.-%igen Ammoniaklösung

Zulauf 6 (homogene Lösung aus):

| | |
|---|---|
| 9,3 g | entionisiertem Wasser und |
| 0,7 g | Natriumperoxodisulfat |

Nach Beendigung des Zulaufs 4 und 6 ließ man das Polymerisationsgemisch noch 30 Minuten bei 80°C nachreagieren; dann wurde 167,2 g entionisiertem Wasser zugegeben und weiterhin 90 Minuten bei 80°C gerührt.

Anschließend wurde die erhaltene wässrige Polymerisatdispersion auf Raumtemperatur abgekühlt. Bei Raumtemperatur wurde noch 189,6 g einer 12 gew.-%igen wässrigen Lösung von Adipinsäuredihydrazid zugegeben. Zum Schluss wurde die Dispersion über ein 125 μm Filter filtriert.

Die erhaltene 3427,7 g der wässrigen Polymerisatdispersion wies einen Feststoffgehalt von 42,6 Gew.-% auf. Die MFT betrug ≤ 0°C. Die mit entionisiertem Wasser verdünnte wässrige Polymerisatdispersion hat einen gewichtsmittleren Teilchendurchmesser von 39 nm (gemessen mittels HDC).

**Vergleichsbeispiel 4 (VB4)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 728,0 g | entionisiertes Wasser und |
| 23,1 g | einer 20 gew.-%igen wässrigen Lösung von Isotridecanolethoxylat [1)] |

vorgelegt und unter Rühren auf 80°C aufgeheizt. Bei Erreichung dieser Temperatur wurde der gesamte Zulauf 1 zugegeben und es wurde 2 Minuten gerührt. Danach wurde Zulauf 2 gestartet und innerhalb von 45 Minuten dosiert. Nach Ende von Zulauf 2 wurde 10 min nachpolymerisiert, dann Zulauf 3 zugegeben und 10 min eingerührt. Anschließend wurde Zulauf 4 gestartet. Nachdem 50% dieses Zulaufs in 45 min dosiert wurde, wurde diese gestoppt, Zulauf 5 zugegeben und 10 min eingerührt. Dann wurde die Restmenge von Zulauf 4 und parallel dazu Zulauf 6 innerhalb von 45

Minuten dosiert.
Zulauf 1 (homogene Lösung aus):

| | |
|---|---|
| 55,8 g | entionisiertem Wasser und |
| 4,2 g | Natriumperoxodisulfat |

Zulauf 2 (homogene Mischung aus):

| | |
|---|---|
| 194,6 g | entionisiertem Wasser |
| 7,7 g | einer 20 gew.-%igen wässrigen Lösung von Isotridecanolethoxylat 1) |
| 45,5 g | Methacrylsäure |
| 18,2 g | einer 25 gew.-%igen Lösung von Ureidoethylmethacrylat in Methylmethacrylat |
| 300,3 g | Methylmethacrylat |
| 45,5 g | n-Butylacrylat |
| 227,5 g | einer 20 gew.-%igen wässrigen Lösung von Diacetonacrylamid und |
| 22,8 g | 2-Ethylhexylthioglykolat |

Zulauf 3:

| | |
|---|---|
| 27,0 g | einer 25 gew.-%igen Ammoniaklösung |

Zulauf 4 (homogene Mischung aus):

| | |
|---|---|
| 393,3 g | entionisiertem Wasser |
| 13,3 g | einer 20 gew.-%igen wässrigen Lösung von Isotridecanolethoxylat 1) |
| 280,0 g | n-Butylacrylat |
| 343,0 g | Methylmethacrylat und |
| 322,0 g | 2-Ethylhexylacrylat |

Zulauf 5:

| | |
|---|---|
| 9,0 g | einer 25 gew.-%igen Ammoniaklösung |

Zulauf 6 (homogene Lösung aus):

| | |
|---|---|
| 9,3 g | entionisiertem Wasser und |
| 0,7 g | Natriumperoxodisulfat |

Nach Beendigung des Zulaufs 4 und 6 ließ man das Polymerisationsgemisch noch 30 Minuten bei 80°C nachreagieren; dann wurde 167,2 g entionisiertem Wasser zugegeben und weiterhin 90 Minuten bei 80°C gerührt.
Anschließend wurde die erhaltene wässrige Polymerisatdispersion auf Raumtemperatur abgekühlt. Bei Raumtemperatur wurde noch 189,6 g einer 12 gew.-%igen wässrigen Lösung von Adipinsäuredihydrazid zugegeben. Zum Schluss wurde die Dispersion über ein 125 μm Filter filtriert.
Die erhaltene 3427,6 g der wässrigen Polymerisatdispersion wies einen Feststoffgehalt von 42,6 Gew.-% auf. Die MFT betrug ≤ 0°C. Die mit entionisiertem Wasser verdünnte wässrige Polymerisatdispersion hat einen gewichtsmittleren Teilchendurchmesser von 43 nm (gemessen mittels HDC).

1) Wie Lutensol TO 82 der Fa. BASF SE

**Formulierungen**

Es wurden sowohl Lasuren als Farben formuliert.

• Nasstransparenz wurde beurteilt an Lasuren: aufgezogen mit einer nassen Schichtdicke von 300 μm auf Leneta-Folie. Benotung mit Schulnoten: 1 = sehr gut, transparent, 5 = sehr schlecht, opaque.

• Weißanlaufen: auf eine Glasplatte wird mit 300 μm Nassschicht-Dicke ein Film der zu prüfenden Lasur aufgezogen. Nach einer Trocknungszeit von 3 d RT kann nun die Messung erfolgen. Die Glasplatter wird in das Becherglas, welches mit ca. 400ml VE H2O befüllt ist, hinein gestellt und nach 45 min visuell beurteilt. Auswertung: 0 = keine Weißfärbung, 1 = eine Spur von Weißfärbung, 2= leichte Weißfärbung, 3= mittlere Weißfärbung, 4= starke Weißfärbung, 5= totale Weißfärbung.

• Wasseraufnahme: Die zu testende Farbe auf ein Teflon-beschichtetes Substrat applizieren. Dabei ist die Spalthöhe so zu wählen, dass eine Schichtdicke von ca. 400 μm trocken entsteht. Nach Trocknung des Films wird dieser vom Substrat abgelöst und freihängend bzw. auf Horte liegend min. 3 d bei Raumtemperatur gelagert. Jeweils 3 Prüfkörper von 50 x 40 mm ausstanzen und nochmal mind. 4 Tage bei RT lagern, deren Gewicht mittels Analysenwaage ermitteln und zwischen die Stahlgewebekörbe legen, damit der Film weder am Boden aufliegt noch aufschwimmen kann und von allen Seiten von Wasser benetzt wird. Nach 24 h Lagerung in dem mit entionisiertem Wasser befüllten Wässerungskasten, Prüflinge entnehmen, abtrocknen und sofort auf der Analysenwaage zurückwiegen. Auswertung:

$$\text{Wasseraufnahme} = [(\text{Auswaage WA} - \text{Einwaage}) / \text{Einwaage}] \times 100\%.$$

• Kapillare Wasseraufnahme sowohl an getrockneten Lasuren als Farben:

- Prüfgerät: Erichsen-Filmaufziehgerät 400 μm 10cm breite.
- Prüfmittel: Kiefernholzbrett (30x10x2cm), 150 ml Becher.
- Durchführung: Die zu prüfende Farbe wird mit dem Erichsen-Filmaufziehgerät auf das Kiefernholzbrett aufgezogen. Mindestens 1d getrocknet bevor das Brett in 3 gleichgroße Stücke zerschnitten (ca. 10x10x2cm) wird und insgesamt 7d getrocknet. Nach der Trocknungszeit werden die Prüfkörper gewogen (0-Wert). Anschließend wird die beschichtete Seite des Prüfkörpers auf die Öffnung der gefüllten Becher gedrückt und gewendet. Nun sollte die unbeschichtete Seite nach unten zeigen und das im Becher befindliche Wasser sollte sich in Kontakt mit der beschichteten Seite des Prüfkörpers befinden. Nach 3d Kontaktzeit das Wasser von den Prüfkörpern entfernen (Becher weg und abtrocknen) und die Prüfkörper zurückwiegen.

• Pendelhärte: Filme mit nasser Schichtdicke von 300 μm wurden auf Glas aufgezogen und 7 Tage bei Raumtemperatur getrocknet. Die Härte wurde bestimmt laut EN ISO 1522 (Dezember 2006).

• Formulierung der Lasur 1

| | | |
|---|---|---|
| Entionisiertes Wasser | | 130 |
| Tego Foamex 810 | Entschäumer der Fa. Evonik Industries AG | 4 |
| Proglyde DMM | Filmbildehilfsmittel der Fa. Dow | 10 |
| Butyldiglykol | Filmbildehilfsmittel | 10 |
| Tinuvin 1130 | Lichtschutzmittel der Fa. BASF SE | 5 |
| Acematt TS 100 | Mattierungsmittel der Fa. Evonik Industries AG | 10 |
| Ammoniak | Neutralisationsmittel (25 gew.-%) | 3 |
| Coatex BR 100 | Verdicker der Fa. Arkema | 1 |
| BYK 348 | Netzmittel der Fa. Byk-Chemie GmbH | 5 |
| Thixol 53 L | Acrylatverdicker der Fa. Arkema Inc. | 37 |
| Tego Antifoam 1488 | Entschäumer der Fa. Evonik Industries AG | 2 |
| Entionisiertes Wasser | | 17 |
| Dispersion | 42,5 gew.-% | 755 |
| Entionisiertes Wasser | | 11 |
| ***Summe*** | | ***1000*** |

• Formulierung der Lasur 2

| | | |
|---|---|---|
| Entionisiertes Wasser | | 65 |
| Rheovis HS 1169 | Polyacrylatverdicker der Fa. BASF SE | 9 |
| Hydropalat WE 3240 | Netzmittel der Fa. BASF SE | 5 |
| Tego Foamex 810 | Entschäumer der Fa. Evonik Industries AG | 5 |
| Texanol | Filmbildehilfsmittel der Fa. Dow | 6 |
| Butyldiglykol | Filmbildehilfsmittel | 18 |
| Tinuvin 1130 | Lichtschutzmittel der Fa. BASF SE | 5 |
| Talc HCIT Extra | Mattierungsmittel der Fa. R2 Group, Dänemark | 10 |
| Ammoniak | Neutralisationsmittel (25 gew.-%) | 2 |
| Rheovis PU1190 | Verdicker der Fa. BASF SE | 2,5 |
| Entionisiertes Wasser | | 65 |
| Dispersion | 42,5 gew.-% | 755 |
| Tego Antifoam 1488 | Entschäumer der Fa. Evonik Industries AG | 2 |
| Entionisiertes Wasser | | 50,5 |
| ***Summe*** | | ***1000*** |

Formulierung der Farbe

| | | |
|---|---|---|
| Entionisiertes Wasser | | 100 |
| Tego Foamex 810 | Entschäumer der Fa. Evonik Industries AG | 4 |
| Dispex CX 4231 | Dispergiermittel der Fa. BASF SE | 10 |
| Texanol | Filmbildehilfsmittel der Fa. Eastman | 5 |
| Ethylendiglykol | | 20 |
| Ammoniak | Neutralisationsmittel (25 gew.-%) | 2 |
| Tiona 595 | Titandioxid der Fa. Millenium Chemicals | 182 |
| Microtalc IT Extra | Magnesiumsilicat der Fa. Mondo Minerals B.V. | 27 |
| Acematt OK 500 | Mattierungsmittel der Fa. Evonik Industries AG | 6 |
| Thixol 53 L (3:1) | Acrylatverdicker der Fa. Arkema Inc. | 5 |
| Tego Foamex 1488 | Entschäumer der Fa. Evonik Industries AG | 2 |
| Dispersion | 42,5 gew.-% | 570 |
| Thixol 53 L (3:1) | Acrylatverdicker der Fa. Arkema Inc. | 27 |
| Ammoniak. | Neutralisationsmittel (25 gew.-%) | 1 |
| Entionisiertes Wasser | | 39 |
| *Summe* | | *1000* |

• Messergebnisse der Versuche

| | | B1 | B2 | B3 | VB1 | VB2 | VB3 | VB4 |
|---|---|---|---|---|---|---|---|---|
| Lasur 1 | Nasstransparenz (Schulnote) | 1 | 1 | 1 | 4 | 5 | | |
| | Kapillare Wasseraufnahme (g/m$^2$x3d) | 280 | 275 | 275 | 318 | 233 | | |
| | Pendelhärte (s) | 52 | 52 | 52 | 41 | 43 | | |
| Lasur 2 | Nasstransparenz (Schulnote) | 1 | | | | | 2 | 4 |
| | Weißanlaufen nach 1 Std (Schulnote) | 2 | | | | | 2 - 3 | 3 - 4 |
| | Wasseraufnahme (24 Std) (%) | 16,0 | | | | | 18,3 | 17,7 |
| | Pendelhärte (s) | 49 | | | | | 52 | 46 |
| Farbe | Kapillare Wasseraufnahme (g/m$^2$x3d) | 203 | 198 | 198 | 250 | 210 | | |
| | Pendelhärte (s) | 57 | 50 | 59 | 42 | 48 | | |

**Beispiel 4 (B4)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 732,6 g | entionisiertes Wasser und |
| 18,5 g | Adeka Reasoap SR-1025 (25 Gew.-% wässrige Lösung) |

vorgelegt und unter Rühren auf 80°C aufgeheizt. Bei Erreichung dieser Temperatur wurde der gesamte Zulauf 1 zugegeben und es wurde 2 Minuten gerührt. Danach wurde Zulauf 2 gestartet und innerhalb von 45 Minuten dosiert. Nach Ende von Zulauf 2 wurde 10 min nachpolymerisiert, dann Zulauf 3 zugegeben und 10 min eingerührt. Anschließend wurde Zulauf 4 gestartet. Nachdem 50% dieses Zulaufs in 45 min dosiert wurde, wurde diese gestoppt, Zulauf 5 zugegeben und 10 min eingerührt. Dann wurde die Restmenge von Zulauf 4 und parallel dazu Zulauf 6 innerhalb von 45

Minuten dosiert.

Zulauf 1 (homogene Lösung aus):

| | |
|---|---|
| 55,8 g | entionisiertem Wasser und |
| 4,2 g | Natriumperoxodisulfat |

Zulauf 2 (homogene Mischung aus):

| | |
|---|---|
| 196,1 g | entionisiertem Wasser |
| 6,2 g | Adeka Reasoap SR-1025 (25 Gew.-% wässrige Lösung) |
| 45,5 g | Methacrylsäure |
| 18,2 g | einer 25 gew.-%igen Lösung von Ureidoethylmethacrylat in Methylmethacrylat |
| 300,3 g | Methylmethacrylat |
| 45,5 g | n-Butylacrylat |
| 227,5 g | einer 20 gew.-%igen wässrigen Lösung von Diacetonacrylamid und |
| 21,0 g | 2-Ethylhexylthioglykolat |

Zulauf 3:

| | |
|---|---|
| 27,0 g | einer 25 gew.-%igen Ammoniaklösung |

Zulauf 4 (homogene Mischung aus):

| | |
|---|---|
| 396,1 g | entionisiertem Wasser |
| 10,6 g | Adeka Reasoap SR-1025 (25 Gew.-% wässrige Lösung) |
| 658,0 g | n-Butylacrylat |
| 280,0 g | Methylmethacrylat und |
| 7,0 g | Allylmethacrylat |

Zulauf 5:

| | |
|---|---|
| 9,0 g | einer 25 gew.-%igen Ammoniaklösung |

Zulauf 6 (homogene Lösung aus):

| | |
|---|---|
| 9,3 g | entionisiertem Wasser und |
| 0,7 g | Natriumperoxodisulfat |

Nach Beendigung des Zulaufs 4 und 6 ließ man das Polymerisationsgemisch noch 30 Minuten bei 80°C nachreagieren; dann wurde 167,2 g entionisiertem Wasser zugegeben und weiterhin 90 Minuten bei 80°C gerührt.

Anschließend wurde die erhaltene wässrige Polymerisatdispersion auf Raumtemperatur abgekühlt. Bei Raumtemperatur wurde noch 189,6 g einer 12 gew.-%igen wässrigen Lösung von Adipinsäuredihydrazid zugegeben. Zum Schluss wurde die Dispersion über ein 125 μm Filter filtriert.

Die erhaltene 3425,9 g der wässrigen Polymerisatdispersion wies einen Feststoffgehalt von 42,3 Gew.-% auf. Die MFT betrug ≤ 0°C. Die mit entionisiertem Wasser verdünnte wässrige Polymerisatdispersion hat einen gewichtsmittleren Teilchendurchmesser von 42 nm (gemessen mittels HDC).

**Vergleichsbeispiel 5 - Adeka Reasoap nur in Vorlage und Zulauf 2**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 732,6 g | entionisiertes Wasser und |

(fortgesetzt)

| | |
|---|---|
| 18,5 g | Adeka Reasoap SR-1025 (25 Gew.-% wässrige Lösung) |

vorgelegt und unter Rühren auf 80°C aufgeheizt. Bei Erreichung dieser Temperatur wurde der gesamte Zulauf 1 zugegeben und es wurde 2 Minuten gerührt. Danach wurde Zulauf 2 gestartet und innerhalb von 45 Minuten dosiert. Nach Ende von Zulauf 2 wurde 10 min nachpolymerisiert, dann Zulauf 3 zugegeben und 10 min eingerührt. Anschließend wurde Zulauf 4 gestartet. Nachdem 50% dieses Zulaufs in 45 min dosiert wurde, wurde diese gestoppt, Zulauf 5 zugegeben und 10 min eingerührt. Dann wurde die Restmenge von Zulauf 4 und parallel dazu Zulauf 6 innerhalb von 45 Minuten dosiert.
Zulauf 1 (homogene Lösung aus):

| | |
|---|---|
| 55,8 g | entionisiertem Wasser und |
| 4,2 g | Natriumperoxodisulfat |

Zulauf 2 (homogene Mischung aus):

| | |
|---|---|
| 196,1 g | entionisiertem Wasser |
| 6,2 g | Adeka Reasoap SR-1025 (25 Gew.-% wässrige Lösung) |
| 45,5 g | Methacrylsäure |
| 18,2 g | einer 25 gew.-%igen Lösung von Ureidoethylmethacrylat in Methylmethacrylat |
| 300,3 g | Methylmethacrylat |
| 45,5 g | n-Butylacrylat |
| 227,5 g | einer 20 gew.-%igen wässrigen Lösung von Diacetonacrylamid und |
| 21,0 g | 2-Ethylhexylthioglykolat |

Zulauf 3:

| | |
|---|---|
| 27,0 g | einer 25 gew.-%igen Ammoniaklösung |

Zulauf 4 (homogene Mischung aus):

| | |
|---|---|
| 387,0 g | entionisiertem Wasser |
| 17,7 g | einer 15 gew.-% wässrigen Lösung von Natriumlaurylsulfat |
| 658,0 g | n-Butylacrylat |
| 280,0 g | Methylmethacrylat und |
| 7,0 g | Allylmethacrylat |

Zulauf 5:

| | |
|---|---|
| 9,0 g | einer 25 gew.-%igen Ammoniaklösung |

Zulauf 6 (homogene Lösung aus):

| | |
|---|---|
| 9,3 g | entionisiertem Wasser und |
| 0,7 g | Natriumperoxodisulfat |

Nach Beendigung des Zulaufs 4 und 6 ließ man das Polymerisationsgemisch noch 30 Minuten bei 80°C nachreagieren; dann wurde 167,2 g entionisiertem Wasser zugegeben und weiterhin 90 Minuten bei 80°C gerührt.
Anschließend wurde die erhaltene wässrige Polymerisatdispersion auf Raumtemperatur abgekühlt. Bei Raumtemperatur wurde noch 189,6 g einer 12 gew.-%igen wässrigen Lösung von Adipinsäuredihydrazid zugegeben. Zum Schluss wurde die Dispersion über ein 125 μm Filter filtriert.
Die erhaltene 3425,8 g der wässrigen Polymerisatdispersion wies einen Feststoffgehalt von 42,5 Gew.-% auf. Die MFT betrug ≤ 0°C. Die mit entionisiertem Wasser verdünnte wässrige Polymerisatdispersion hat einen gewichtsmittleren Teilchendurchmesser von 47 nm (gemessen mittels HDC).

**Vergleichsbeispiel 6 - Adeka Reasoap nur in Zulauf 4 (VB6)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 719,6 g | entionisiertes Wasser und |
| 30,8 g | einer 15 gew.-% wässrigen Lösung von Natriumlaurylsulfat |

vorgelegt und unter Rühren auf 80°C aufgeheizt. Bei Erreichung dieser Temperatur wurde der gesamte Zulauf 1 zugegeben und es wurde 2 Minuten gerührt. Danach wurde Zulauf 2 gestartet und innerhalb von 45 Minuten dosiert. Nach Ende von Zulauf 2 wurde 10 min nachpolymerisiert, dann Zulauf 3 zugegeben und 10 min eingerührt. Anschließend wurde Zulauf 4 gestartet. Nachdem 50% dieses Zulaufs in 45 min dosiert wurde, wurde diese gestoppt, Zulauf 5 zugegeben und 10 min eingerührt. Dann wurde die Restmenge von Zulauf 4 und parallel dazu Zulauf 6 innerhalb von 45 Minuten dosiert.
Zulauf 1 (homogene Lösung aus):

| | |
|---|---|
| 55,8 g | entionisiertem Wasser und |
| 4,2 g | Natriumperoxodisulfat |

Zulauf 2 (homogene Mischung aus):

| | |
|---|---|
| 192,1 g | entionisiertem Wasser |
| 10,3 g | einer 15 gew.-% wässrigen Lösung von Natriumlaurylsulfat |
| 45,5 g | Methacrylsäure |
| 18,2 g | einer 25 gew.-%igen Lösung von Ureidoethylmethacrylat in Methylmethacrylat |
| 300,3 g | Methylmethacrylat |
| 45,5 g | n-Butylacrylat |
| 227,5 g | einer 20 gew.-%igen wässrigen Lösung von Diacetonacrylamid und |
| 21,0 g | 2-Ethylhexylthioglykolat |

Zulauf 3:

| | |
|---|---|
| 27,0 g | einer 25 gew.-%igen Ammoniaklösung |

Zulauf 4 (homogene Mischung aus):

| | |
|---|---|
| 396,1 g | entionisiertem Wasser |
| 10,6 g | Adeka Reasoap SR-1025 (25 Gew.-% wässrige Lösung) |
| 658,0 g | n-Butylacrylat |
| 280,0 g | Methylmethacrylat und |
| 7,0 g | Allylmethacrylat |

Zulauf 5:

| | |
|---|---|
| 9,0 g | einer 25 gew.-%igen Ammoniaklösung |

Zulauf 6 (homogene Lösung aus):

| | |
|---|---|
| 9,3 g | entionisiertem Wasser und |
| 0,7 g | Natriumperoxodisulfat |

Nach Beendigung des Zulaufs 4 und 6 ließ man das Polymerisationsgemisch noch 30 Minuten bei 80°C nachreagieren; dann wurde 167,2 g entionisiertem Wasser zugegeben und weiterhin 90 Minuten bei 80°C gerührt.

Anschließend wurde die erhaltene wässrige Polymerisatdispersion auf Raumtemperatur abgekühlt. Bei Raumtemperatur wurde noch 189,6 g einer 12 gew.-%igen wässrigen Lösung von Adipinsäuredihydrazid zugegeben. Zum Schluss wurde die Dispersion über ein 125 µm Filter filtriert.

Die erhaltene 3425,3 g der wässrigen Polymerisatdispersion wies einen Feststoffgehalt von 42,4 Gew.-% auf. Die MFT betrug ≤ 0°C. Die mit entionisiertem Wasser verdünnte wässrige Polymerisatdispersion hat einen gewichtsmittleren Teilchendurchmesser von 46 nm (gemessen mittels HDC).

Formulierung der Lasur

| | | |
|---|---|---|
| Entionisiertes Wasser | | 110 |
| Tego Foamex 810 | Entschäumer der Fa. Evonik Industries AG | 4 |
| Butyldiglykol | Filmbildehilfsmittel | 27 |
| Tinuvin 1130 | Lichtschutzmittel der Fa. BASF SE | 5 |
| Hydropalat WE 3240 | Netzmittel der Fa. BASF SE | 2 |
| Tego Airex 902W | Entschäumer der Fa. Evonik Industries AG | 3 |
| Ammoniak | Neutralisationsmittel (25 gew.-%) | 2 |
| Acematt TS 100 | Mattierungsmittel der Fa. Evonik Industries AG | 12,5 |
| Deuteron MK | Mattierungsmittel der Fa. Deuteron GmbH | 12,5 |
| Rheovis PU1190 | Verdicker der Fa. BASF SE | 11,5 |
| Entionisiertes Wasser | | 20 |
| Dispersion | 42,5 gew.-% | 755 |
| Entionisiertes Wasser | | 35,5 |
| ***Summe*** | | ***1000*** |

Messergebnisse der Versuche

| | | **B4** | **VB5** | **VB6** |
|---|---|---|---|---|
| **Lasur** | Weißanlaufen nach 1 Std (Schulnote) | 3 | 3 - 4 | 3 - 4 |
| | Kapillare Wasseraufnahme (g/m$^2$x3d) | 86 | 99 | 118 |
| | Pendelhärte (s) | 38 | 38 | 35 |

**Patentansprüche**

**1.** Polymerisat-Dispersion, erhältlich durch mindestens eine zweistufige Emulsionspolymerisation, wobei

1) ein Polymerisat A durch eine radikalische Polymerisation aus einer 1. Zusammensetzung hergestellt wird, umfassend

A) mindestens ein Monomer,
B) mindestens einen anionischen copolymerisierbaren Emulgator,

2) das unter 1) hergestellte Polymerisat A mit einer Base versetzt wird, wobei das gewichtsmittlere Molekulargewicht der Polymere der Polymerisation der ersten Stufe zwischen 5 und 25 kDa liegt und die Monomere der Polymerisation der ersten Stufe so ausgewählt sind, dass die für ein aus den Monomeren der ersten Stufe

hergestelltes Polymer berechnete Glasübergangstemperatur im Bereich von 70 °C bis 125 °C liegt.
3) ein Polymerisat B durch radikalische Polymerisation aus einer 2. Zusammensetzung in Gegenwart des unter 2) behandelten Polymerisates A hergestellt wird, umfassend

A) mindestens ein Monomer,
B) mindestens einen anionischen copolymerisierbaren Emulgator, wobei die Monomere der Polymerisation der zweiten Stufe so ausgewählt sind, dass die für ein aus den Monomeren der zweiten Stufe hergestelltes Polymer berechnete Glasübergangstemperatur im Bereich von 0 °C bis -80 °C liegt,
wobei bei der Polymerisation der ersten Stufe mindestens ein Molekulargewichtsregler eingesetzt wird.

**2.** Polymerisat-Dispersion gemäß Anspruch 1, wobei ein Polymerisat A in wässrigem Medium durch eine radikalische Emulsionspolymerisation hergestellt wird.

**3.** Polymerisat-Dispersion gemäß Anspruch 1 oder 2, wobei die Polymerisat-Dispersion noch ein vernetzendes Additiv enthält.

**4.** Polymerisat-Dispersion nach einem der Ansprüche 1 bis 3, wobei das Polymerisat A in Wasser dispergiert ist.

**5.** Polymerisat-Dispersion gemäß einem der Ansprüche 1 bis 4, wobei die 1. Zusammensetzung

A1) mindestens einen (Meth)acrylsäure(cyclo)alkylester,
A2) mindestens eine $\alpha,\beta$-ethylenisch ungesättigte Carbonsäure,
A3) mindestens eine Verbindung ausgewählt aus der Gruppe bestehend aus (Meth)-acrylsäure 2-(2-oxo-imidazolidin-1-yl)-ethylester, 2-Ureidoethyl(meth)acrylat (UMA), Acetoacetoxyethylacrylat, Acetoacetoxypropylmethacrylat, Acetoacetoxybutylmethacrylat, 2-(Acetoacetoxy)ethylmethacrylat, Diacetonacrylamid (DAAM), Diacetonmethacrylamid oder Mischungen daraus, und
A4) mindestens einen Molekulargewichtsregler, und
B) mindestens einen anionischen copolymerisierbaren Emulgator umfasst.

**6.** Polymerisat-Dispersion gemäß einem der Ansprüche 1 bis 5, wobei die 2. Zusammensetzung

A1) mindestens einen (Meth)acrylsäure(cyclo)alkyester und/ oder einen Vinylaromaten, und
B) mindestens einen anionischen copolymerisierbaren Emulgator umfasst.

**7.** Polymerisat-Dispersion gemäß einem der Ansprüche 1 bis 6, wobei der mindestens eine anionische copolymerisierbare Emulgator ausgewählt ist aus der Gruppe bestehend aus

(1) einer Verbindung gemäß Formel (I)

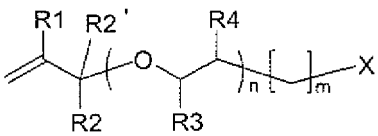

(I)

mit der Bedeutung

R1 : H, Alkyl, Cycloalkyl, Aralkyl, Aryl oder Alkoxyaryl,
R2, R2' = H oder R2 und R2' = O,
R3 : H oder Alkyl,
R4 : H oder OH,
X : $SO_3^-$, $HPO_4^-$, $PO_4^{2-}$ oder $COO^-$,
m: 0 oder 1,
n: eine ganze Zahl zwischen 0 und 1000;

(2) einer Verbindung gemäß Formel (II)

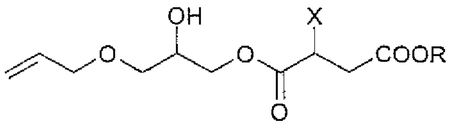

(II)

mit der Bedeutung

X : $SO_3^-$, $PO_4^{2-}$ oder $SO_4^-$,
R: H, Alkyl, Cycloalkyl, Aralkyl, Aryl oder Alkoxyaryl;

(3) einer Verbindung der Formel (III)

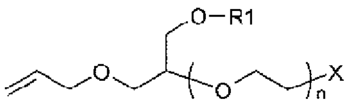

(III)

mit der Bedeutung

R1 : H, Alkyl, Cycloalkyl, Aralkyl, Aryl oder Alkoxyaryl,
X : $SO_4^-$, $SO_3^-$, $HPO_4^-$, $PO_4^{2-}$ oder $COO^-$,
n: eine ganze Zahl zwischen 0 und 1000;

(4) einer Verbindung der Formel (IV)

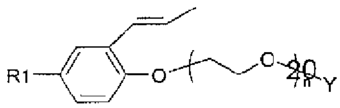

(IV)

mit der Bedeutung

R1 : H, Alkyl, Cycloalkyl, Aralkyl, Aryl oder Alkoxyaryl, und
Y : $SO_3^-$, $PHO_3^-$ oder $PO_3^{2-}$,
n: eine ganze Zahl zwischen 0 und 1000;

oder Mischungen aus den Verbindungen der Formeln (I) bis (IV).

**8.** Polymerisat-Dispersion gemäß einem der Ansprüche 1 bis 7, wobei die Teilchengröße des Polymerisats A und/oder des Polymerisats B in einem Bereich von 1 nm bis 100 nm liegt.

**9.** Polymerisat-Dispersion gemäß einem der Ansprüche 1 bis 8, wobei die 1. Zusammensetzung

A1) 40-94 Gew.-% mindestens eines (Meth)acrylsäure(cyclo)alkylesters,
A2) 1-15 Gew.-% mindestens einer $\alpha,\beta$-ethylenisch ungesättigten Carbonsäure,
A3) 5-45 Gew.-% mindestens einer Verbindung ausgewählt aus der Gruppe bestehend aus (Meth)-acrylsäure 2-(2-oxo-imidazolidin-1-yl)-ethylester, 2-Ureidoethyl(meth)acrylat (UMA), Acetoacetoxyethylacrylat, Acetoacetoxypropylmethacrylat, Acetoacetoxybutylmethacrylat, 2-(Acetoacetoxy)ethylmethacrylat, Diacetonacrylamid (DAAM), Diacetonmethacrylamid oder Mischungen daraus, umfasst,

wobei die Mengenangaben von A1) bis A3) jeweils auf 100 Gew.-% der in der 1. Zusammensetzung zu polymerisierenden Monomere bezogen sind.

**10.** Polymerisat-Dispersion gemäß einem der Ansprüche 1 bis 8, wobei die 1. Zusammensetzung

A1) 40-93,9 Gew.-% mindestens eines (Meth)acrylsäure(cyclo)alkylesters,
A2) 1-15 Gew.-% mindestens einer $\alpha,\beta$-ethylenisch ungesättigten Carbonsäure,
A3) 5-20 Gew.-% mindestens einer Verbindung ausgewählt aus der Gruppe bestehend aus (Meth)-acrylsäure

2-(2-oxo-imidazolidin-1-yl)-ethylester, 2-Ureidoethyl(meth)acrylat (UMA), Acetoacetoxyethylacrylat, Acetoacetoxypropylmethacryiat, Acetoacetoxybutylmethacrylat, 2-(Acetoacetoxy)ethyl methacrylat, Diacetonacrylamid (DAAM), Diacetonmethacrylamid oder Mischungen daraus,
A4) 0-5 Gew.-% mindestens eines Molekulargewichtsreglers, und
B) 0,05-5 Gew.-% mindestens eines anionischen copolymerisierbaren Emulgators umfasst,

wobei die Mengenangaben von A1) bis B) jeweils auf 100 Gew.-% der in der 1. Zusammensetzung zu polymerisierenden Monomere bezogen sind.

**11.** Polymerisat-Dispersion gemäß einem der Ansprüche 1 bis 10, wobei die Polymerisat-Dispersion frei von nicht polymerisierbaren Emulgatoren ist.

**12.** Verfahren zur Herstellung einer Polymerisat-Dispersion gemäß einem der Ansprüche 1 bis 11, wobei mindestens eine zweistufige Emulsionspolymerisation durchgeführt wird, umfassend die Schritte:

1) Herstellung eines Polymerisats A durch eine radikalische Polymerisation aus einer 1. Zusammensetzung, umfassend

A) mindestens ein Monomer,
B) mindestens einen anionischen copolymerisierbaren Emulgator,

2) Versetzen des unter 1) hergestellte Polymerisats A mit einer Base, wobei das gewichtsmittlere Molekulargewicht der Polymere der Polymerisation der ersten Stufe zwischen 5 und 25 kDa liegt und die Monomere der Polymerisation der ersten Stufe so ausgewählt sind, dass die für ein aus den Monomeren der ersten Stufe hergestelltes Polymer berechnete Glasübergangstemperatur im Bereich von 70 °C bis 125 °C liegt,
3) Herstellung eines Polymerisats B durch radikalische Polymerisation aus einer 2. Zusammensetzung in Gegenwart des unter 2) behandelten Polymerisates A, umfassend

A) mindestens ein hydrophiles und/oder hydrophobes Monomer,
B) mindestens einen anionischen copolymerisierbaren Emulgator, wobei die Monomere der Polymerisation der zweiten Stufe so ausgewählt sind, dass die für ein aus den Monomeren der zweiten Stufe hergestelltes Polymer berechnete Glasübergangstemperatur im Bereich von 0 °C bis -80 °C liegt,
wobei bei der Polymerisation der ersten Stufe mindestens ein Molekulargewichtsregler eingesetzt wird.

**13.** Verfahren zur Herstellung einer Polymerisat-Dispersion gemäß einem der Ansprüche 1 bis 11,wobei mindestens eine zweistufige Emulsionspolymerisation durchgeführt wird,
umfassend die Schritte:

1) Herstellung eines in Wasser dispergierten Polymerisats A in wässrigem Medium durch eine radikalische Polymerisation aus einer 1. Zusammensetzung, wobei die 1. Zusammensetzung

A1) mindestens einen (Meth)acrylsäure(cyclo)alkylester,
A2) mindestens eine $\alpha,\beta$-ethylenisch ungesättigte Carbonsäure,
A3) mindestens eine Verbindung ausgewählt aus der Gruppe bestehend aus (Meth)-acrylsäure 2-(2-oxo-imidazolidin-1-yl)-ethyl ester, 2-Ureidoethyl(meth)acrylat (UMA), Acetoacetoxyethylacrylat, Acetoacetoxypropylmethacrylat, Acetoacetoxybutyl methacrylat, 2-(Acetoacetoxy)ethyl methacrylat, Diacetonacrylamid (DAAM), Diacetonmethacrylamid, oder Mischungen daraus, und
A4) mindestens einen Molekulargewichtsregler, und
B) mindestens einen anionischen copolymerisierbaren Emulgator umfasst,

2) Versetzen des unter 1) hergestellte Polymerisats A mit einer Base,
3) Herstellung eines Polymerisats B durch radikalische Polymerisation aus einer 2. Zusammensetzung in Gegenwart des unter 2) behandelten Polymerisates A, wobei die 2. Zusammensetzung

A1) mindestens einen (Meth)acrylsäure(cyclo)ester, und
B) mindestens einen anionischen copolymerisierbaren Emulgator umfasst.

**14.** Verfahren zur Herstellung einer Polymerisat-Dispersion gemäß einem der Ansprüche 1 bis 1 1,wobei der mindestens

eine anionische copolymerisierbare Emulgator ausgewählt ist aus der Gruppe bestehend

(1) einer Verbindung gemäß Formel (I)

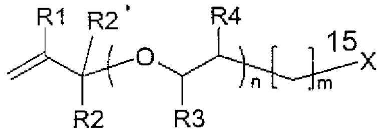

(I)

mit der Bedeutung

R1 : H, Alkyl, Cycloalkyl, Aralkyl, Aryl oder Alkoxyaryl,
R2, R2' = H oder R2 und R2' = O,
R3 : H oder Alkyl,
R4 : H oder OH,
X : $SO_3^-$, $HPO_4^-$, $PO_4^{2-}$ oder $COO^-$,
m: 0 oder 1,
n: eine ganze Zahl zwischen 0 und 1000;

(2) einer Verbindung gemäß Formel (II)

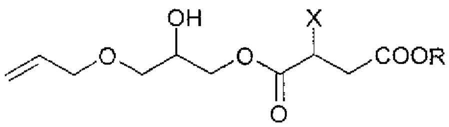

(II)

mit der Bedeutung

X: $SO_3^-$, $PO_4^{2-}$ oder $SO_4^-$,
R: H, Alkyl, Cycloalkyl, Aralkyl, Aryl oder Alkoxyaryl;

(3) einer Verbindung der Formel (III)

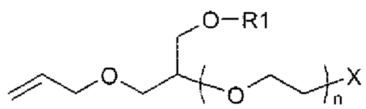

(III)

mit der Bedeutung

R1 : H, Alkyl, Cycloalkyl, Aralkyl, Aryl oder Alkoxyaryl,
X : $SO_4^-$, $SO_3^-$, $HPO_4^-$, $PO_4^{2-}$ oder $COO^-$,
n: eine ganze Zahl zwischen 0 und 1000;

(4) einer Verbindung der Formel (IV)

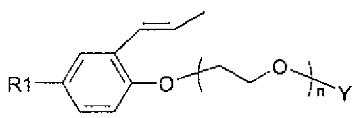

(IV)

mit der Bedeutung

R1 : H, Alkyl, Cycloalkyl, Aralkyl, Aryl oder Alkoxyaryl, und
Y : $SO_3^-$, $PHO_3^-$ oder $PO_3^{2-}$,
n: eine ganze Zahl zwischen 0 und 1000;

oder Mischungen aus den Verbindungen der Formeln (I) bis (IV).

**15.** Beschichtungsmittel in Form einer wässrigen Zusammensetzung, enthaltend

i) wenigstens eine Polymerisat-Dispersion gemäß einem der Ansprüche 1 bis 11,
ii) gegebenenfalls wenigstens einen (an)organischen Füllstoff und/oder ein (an)organisches Pigment,
iii) gegebenenfalls ein Additiv,
iv) Wasser.

**16.** Verwendung einer Polymerisat-Dispersion gemäß einem der Ansprüche 1 bis 11 für Beschichtungsmassen.

**17.** Verwendung einer Polymerisat-Dispersion gemäß einem der Ansprüche 1 bis 11 für Anstrichmittel.

## Claims

**1.** A polymer dispersion obtainable by at least one two-stage emulsion polymerization, by

1) preparing a polymer A by a radical polymerization from a $1^{st}$ composition comprising

A) at least one monomer,
B) at least one anionic copolymerizable emulsifier,

2) admixing the polymer A prepared at 1) with a base where the weight-average molecular weight of the polymers of the polymerization of the first stage is between 5 and 25 kDa, and the monomers of the polymerization of the first stage are selected such that the glass transition temperature calculated for a polymer prepared from the monomers of the first stage is in the range from 70°C to 125°C,
3) in the presence of the polymer A treated at 2), preparing a polymer B by radical polymerization from a $2^{nd}$ composition comprising

A) at least one monomer,
B) at least one anionic copolymerizable emulsifier where the monomers of the polymerization of the second stage are selected such that the glass transition temperature calculated for a polymer prepared from the monomers of the second stage is in the range from 0°C to -80°C,
where at least one chain transfer agent is used in the polymerization of the first stage.

**2.** The polymer dispersion according to claim 1, wherein a polymer A is prepared in aqueous medium by a radical emulsion polymerization.

**3.** The polymer dispersion according to claim 1 or 2, wherein the polymer dispersion further comprises a crosslinking additive.

**4.** The polymer dispersion according to any of claims 1 to 3, wherein the polymer A is in dispersion in water.

**5.** The polymer dispersion according to any of claims 1 to 4, wherein the $1^{st}$ composition comprises

A1) at least one (cyclo)alkyl (meth)acrylate,
A2) at least one $\alpha,\beta$-ethylenically unsaturated carboxylic acid,
A3) at least one compound selected from the group consisting of 2-(2-oxoimidazolidin-1-yl)ethyl (meth)acrylate, 2-ureidoethyl (meth)acrylate (UMA), acetoacetoxyethyl acrylate, acetoacetoxypropyl methacrylate, acetoacetoxybutyl methacrylate, 2-(acetoacetoxy)ethyl methacrylate, diacetoneacrylamide (DAAM), diacetonemethacrylamide, or mixtures thereof, and
A4) at least one chain transfer agent, and
B) at least one anionic copolymerizable emulsifier.

**6.** The polymer dispersion according to any of claims 1 to 5, wherein the $2^{nd}$ composition comprises

A1) at least one (cyclo)alkyl (meth)acrylate and/or a vinylaromatic, and

B) at least one anionic copolymerizable emulsifier.

**7.** The polymer dispersion according to any of claims 1 to 6, wherein the at least one anionic copolymerizable emulsifier is selected from the group consisting of

(1) a compound of formula (I)

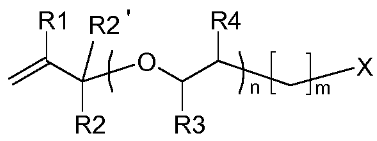

(I)

where

R1 is H, alkyl, cycloalkyl, aralkyl, aryl, or alkoxyaryl,
R2, R2' are H or R2 and R2' are O,
R3 is H or alkyl,
R4 is H or OH,
X is $SO_3^-$, $HPO_4^-$, $PO_4^{2-}$, or $COO^-$,
m is 0 or 1, and
n is an integer between 0 and 1000;

(2) a compound of formula (II)

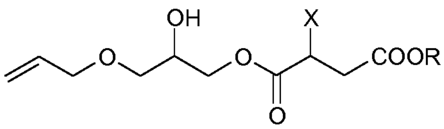

(II)

where

X is $SO_3^-$, $PO_4^{2-}$, or $SO_4^-$, and
R is H, alkyl, cycloalkyl, aralkyl, aryl or alkoxyaryl;

(3) a compound of formula (III)

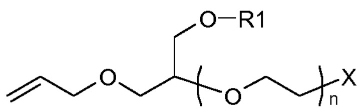

(III)

where

R1 is H, alkyl, cycloalkyl, aralkyl, aryl or alkoxyaryl,
X is $SO_4^-$, $SO_3^-$, $HPO_4^-$, $PO_4^{2-}$, or $COO^-$, and
n is an integer between 0 and 1000;

(4) a compound of the formula (IV)

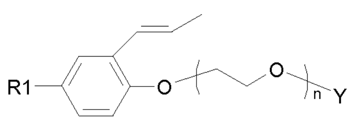

(IV)

where

R1 is H, alkyl, cycloalkyl, aralkyl, aryl, or alkoxyaryl,
Y is $SO_3^-$, $PHO_3^-$, or $PO_3^{2-}$, and
n is an integer between 0 and 1000;

or mixtures of the compounds of the formulae (I) to (IV) .

**8.** The polymer dispersion according to any of claims 1 to 7, wherein the particle size of the polymer A and/or of the polymer B is in a range from 1 nm to 100 nm.

**9.** The polymer dispersion according to any of claims 1 to 8, wherein the 1st composition comprises

A1) 40-94 wt% of at least one (cyclo)alkyl (meth)acrylate,
A2) 1-15 wt% of at least one α,β-ethylenically unsaturated carboxylic acid,
A3) 5-45 wt% of at least one compound selected from the group consisting of 2-(2-oxoimidazolidin-1-yl)ethyl (meth)acrylate, 2-ureidoethyl (meth)acrylate (UMA), acetoacetoxyethyl acrylate, acetoacetoxypropyl methacrylate, acetoacetoxybutyl methacrylate, 2-(acetoacetoxy)ethyl methacrylate, diacetoneacrylamide (DAAM), diacetonemethacrylamide, or mixtures thereof,

the quantity figures of A1) to A3) being based in each case on 100 wt% of the monomers to be polymerized in the 1st composition.

**10.** The polymer dispersion according to any of claims 1 to 8, wherein the 1st composition comprises

A1) 40-93.9 wt% of at least one (cyclo)alkyl (meth)acrylate,
A2) 1-15 wt% of at least one α,β-ethylenically unsaturated carboxylic acid,
A3) 5-20 wt% of at least one compound selected from the group consisting of 2-(2-oxoimidazolidin-1-yl)ethyl (meth)acrylate, 2-ureidoethyl (meth)acrylate (UMA), acetoacetoxyethyl acrylate, acetoacetoxypropyl methacrylate, acetoacetoxybutyl methacrylate, 2-(acetoacetoxy)ethyl methacrylate, diacetoneacrylamide (DAAM), diacetonemethacrylamide, or mixtures thereof,
A4) 0-5 wt% of at least one chain transfer agent, and
B) 0.05-5 wt% of at least one anionic copolymerizable emulsifier,

the quantity figures of A1) to B) being based in each case on 100 wt% of the monomers to be polymerized in the 1st composition.

**11.** The polymer dispersion according to any of claims 1 to 10, wherein the polymer dispersion is free from nonpolymerizable emulsifiers.

**12.** A process for preparing a polymer dispersion according to any of claims 1 to 11, by carrying out at least one two-stage emulsion polymerization comprising the steps of:

1) preparing a polymer A by a radical polymerization from a 1st composition comprising

A) at least one monomer,
B) at least one anionic copolymerizable emulsifier,

2) admixing the polymer A prepared at 1) with a base, where the weight-average molecular weight of the polymers of the polymerization of the first stage is between 5 and 25 kDa, and the monomers of the polymerization of the first stage are selected such that the glass transition temperature calculated for a polymer prepared from the monomers of the first stage is in the range from 70°C to 125°C,
3) in the presence of the polymer A treated at 2), preparing a polymer B by radical polymerization from a 2nd composition comprising

A) at least one hydrophilic and/or hydrophobic monomer,
B) at least one anionic copolymerizable emulsifier, where the monomers of the polymerization of the second stage are selected such that the glass transition temperature calculated for a polymer prepared from the monomers of the second stage is in the range from 0°C to -80°C,
where at least one chain transfer agent is used in the polymerization of the first stage.

**13.** A process for preparing a polymer dispersion according to any of claims 1 to 11, by carrying out at least one two-stage emulsion polymerization, comprising the steps of:

1) preparing a polymer A in dispersion in water, in aqueous medium, by a radical polymerization from a 1st composition, the 1st composition comprising

A1) at least one (cyclo)alkyl (meth)acrylate,
A2) at least one $\alpha,\beta$-ethylenically unsaturated carboxylic acid,
A3) at least one compound selected from the group consisting of 2-(2-oxoimidazolidin-1-yl)ethyl (meth)acrylate, 2-ureidoethyl (meth)acrylate (UMA), acetoacetoxyethyl acrylate, acetoacetoxypropyl methacrylate, acetoacetoxybutyl methacrylate, 2-(acetoacetoxy)ethyl methacrylate, diacetoneacrylamide (DAAM), diacetonemethacrylamide, or mixtures thereof, and
A4) at least one chain transfer agent, and
B) at least one anionic copolymerizable emulsifier,

2) admixing the polymer A prepared at 1) with a base,
3) in the presence of the polymer A treated at 2), preparing a polymer B by radical polymerization from a 2nd composition, the 2nd composition comprising

A1) at least one (cyclo) (meth)acrylate and
B) at least one anionic copolymerizable emulsifier.

**14.** A process for preparing a polymer dispersion according to any of claims 1 to 11, wherein the at least one anionic copolymerizable emulsifier is selected from the group consisting of

(1) a compound of formula (I)

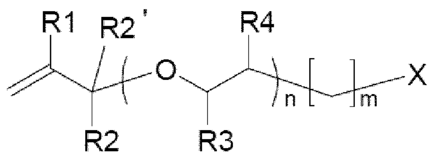
(I)

where

R1 is H, alkyl, cycloalkyl, aralkyl, aryl, or alkoxyaryl,
R2, R2' are H or R2 and R2' are O,
R3 is H or alkyl,
R4 is H or OH,
X is $SO_3^-$, $HPO_4^-$, $PO_4^{2-}$, or $COO^-$,
m is 0 or 1, and
n is an integer between 0 and 1000;

(2) a compound of formula (II)

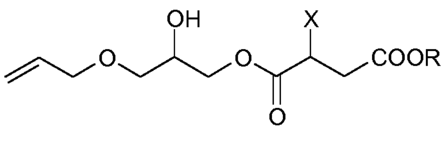
(II)

where

X is $SO_3^-$, $PO_4^{2-}$, or $SO_4^-$, and
R is H, alkyl, cycloalkyl, aralkyl, aryl or alkoxyaryl;

(3) a compound of formula (III)

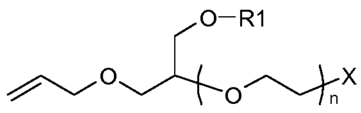

(III)

where

R1 is H, alkyl, cycloalkyl, aralkyl, aryl or alkoxyaryl,
X is $SO_4^-$, $SO_3^-$, $HPO_4^-$, $PO_4^{2-}$, or $COO^-$, and
n is an integer between 0 and 1000;

(4) a compound of the formula (IV)

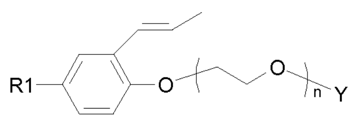

(IV)

where

R1 is H, alkyl, cycloalkyl, aralkyl, aryl, or alkoxyaryl,
Y is $SO_3^-$, $PHO_3^-$, or $PO_3^{2-}$, and
n is an integer between 0 and 1000;

or mixtures of the compounds of the formulae (I) to (IV) .

**15.** A coating material in the form of an aqueous composition comprising

i) at least one polymer dispersion according to any of claims 1 to 11,
ii) optionally at least one (in)organic filler and/or (in)organic pigment,
iii) optionally an additive,
iv) water.

**16.** The use of a polymer dispersion according to any of claims 1 to 11 for coating compositions.

**17.** The use of a polymer dispersion according to any of claims 1 to 11 for paints and varnishes.

## Revendications

**1.** Dispersion de polymère, pouvant être obtenue par au moins une polymérisation en émulsion en deux étapes,

1) un polymère A étant préparé par une polymérisation radicalaire à partir d'une 1re composition, comprenant

A) au moins un monomère,
B) au moins un émulsifiant copolymérisable anionique,

2) le polymère A préparé dans 1) étant mis en contact avec une base, le poids moléculaire moyen en poids des polymères de la polymérisation de la première étape se situant entre 5 et 25 kDa et les monomères de la polymérisation de la première étape étant choisis de sorte que la température de transition vitreuse calculée pour un polymère préparé à partir des monomères de la première étape se situe dans la plage de 70 °C à 125 °C,
3) un polymère B étant préparé par polymérisation radicalaire à partir d'une 2e composition en présence du polymère A traité dans 2), comprenant

A) au moins un monomère,
B) au moins un émulsifiant copolymérisable anionique, les monomères de la polymérisation de la deuxième étape étant choisis de sorte que la température de transition vitreuse calculée pour un polymère préparé

à partir des monomères de la première étape se situe dans la plage de 0 °C à -80 °C,
au moins un régulateur du poids moléculaire étant utilisé dans la polymérisation de la première étape.

**2.** Dispersion de polymère selon la revendication 1, un polymère A en milieu aqueux étant préparé par une polymérisation radicalaire en émulsion.

**3.** Dispersion de polymère selon la revendication 1 ou 2, la dispersion de polymère contenant en plus un additif réticulant.

**4.** Dispersion de polymère selon l'une quelconque des revendications 1 à 3, le polymère A étant dispersé dans de l'eau.

**5.** Dispersion de polymère selon l'une quelconque des revendications 1 à 4, la 1re composition comprenant

A1) au moins un (cyclo)alkylester d'acide (méth) acrylique.
A2) au moins un acide carboxylique $\alpha,\beta$-éthyléniquement insaturé.
A3) au moins un composé choisi dans le groupe constitué par le (méth)acrylate de 2-(2-oxo-imidazolidin-1-yl)-éthyle, le (méth)acrylate de 2-uréidoéthyle (UMA), l'acrylate d'acétoacétoxyéthyle, le méthacrylate d'acétoacétoxypropyle, le méthacrylate d'acétoacétoxybutyle, le méthacrylate de 2-(acétoacétoxy)éthyle, le diacétone acrylamide (DAAM), le diacétone méthacrylamide ou des mélanges correspondants, et
A4) au moins un régulateur du poids moléculaire, et
B) au moins un émulsifiant copolymérisable anionique.

**6.** Dispersion de polymère selon l'une quelconque des revendications 1 à 5, la 2e composition comprenant

A1) au moins un (cyclo)alkylester d'acide (méth)acrylique et/ou un composé aromatique vinylique, et
B) au moins un émulsifiant copolymérisable anionique.

**7.** Dispersion de polymère selon l'une quelconque des revendications 1 à 6, l'au moins un émulsifiant copolymérisable anionique étant choisi dans le groupe constitué par

(1) un composé selon la formule (I)

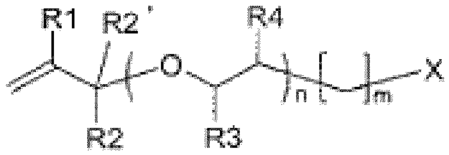

(I)

avec la signification

R1 : H, alkyle, cycloalkyle, aralkyle, aryle ou alcoxylaryle,
R2, R2' = H ou R2 et R2' = O,
R3 : H ou alkyle,
R4 : H ou OH,
X : $SO_3^-$, $HPO_4^-$, $PO_4^{2-}$ ou $COO^-$,
m : 0 ou 1,
n : un nombre entier entre 0 et 1000 ;

(2) un composé selon la formule (II)

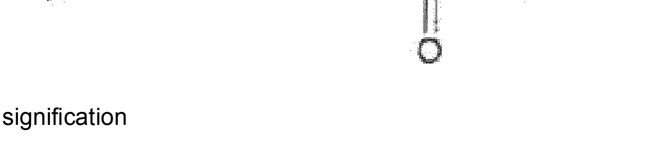

(II)

avec la signification

X : $SO_3^-$, $PO_4^{2-}$ ou $SO_4^-$,
R : H, alkyle, cycloalkyle, aralkyle, aryle ou alcoxylaryle,

(3) un composé de la formule (III)

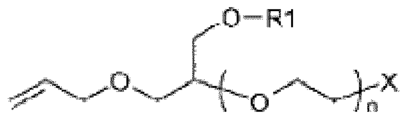

(III)

avec la signification

R1 : H, alkyle, cycloalkyle, aralkyle, aryle ou alcoxylaryle,
X : $SO_4^-$, $SO_3^-$, $HPO_4^-$, $PO_4^{2-}$ ou $COO^-$,
n : un nombre entier entre 0 et 1000 ;

(4) un composé de la formule (IV)

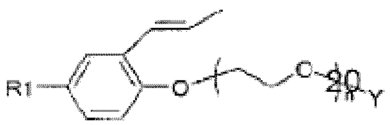

(IV)

avec la signification

R1 : H, alkyle, cycloalkyle, aralkyle, aryle ou alcoxylaryle, et
Y : $SO_3^-$, $PHO_3^-$ ou $PO_3^{2-}$,
n : un nombre entier entre 0 et 1000 ;

ou des mélanges des composés des formules (I) à (IV).

**8.** Dispersion de polymère selon l'une quelconque des revendications 1 à 7, la grosseur de particule du polymère A et/ou du polymère B se situant dans une plage de 1 nm à 100 nm.

**9.** Dispersion de polymère selon l'une quelconque des revendications 1 à 8, la 1re composition comprenant

A1) 40 à 94 % en poids d'au moins un (cyclo)alkylester d'acide (méth)acrylique,
A2) 1 à 15 % en poids d'au moins un acide carboxylique $\alpha,\beta$-éthyléniquement insaturé,
A3) 5 à 45 % en poids d'au moins un composé choisi dans le groupe constitué par le (méth)acrylate de 2-(2-oxo-imidazolidin-1-yl)-éthyle, le (méth)acrylate de 2-uréidoéthyle (UMA), l'acrylate d'acétoacétoxyéthyle, le méthacrylate d'acétoacétoxypropyle, le méthacrylate d'acétoacétoxybutyle, le méthacrylate de 2-(acétoacétoxy)éthyle, le diacétone acrylamide (DAAM), le diacétone méthacrylamide ou des mélanges correspondants,

les données quantitatives de A1) à A3) se rapportant à chaque fois à 100 % en poids des monomères à polymériser dans la 1re composition.

**10.** Dispersion de polymère selon l'une quelconque des revendications 1 à 8, la 1re composition comprenant

A1) 40 à 93,9 % en poids d'au moins un (cyclo)alkylester d'acide (méth)acrylique.
A2) 1 à 15 % en poids d'au moins un acide carboxylique $\alpha,\beta$-éthyléniquement insaturé.
A3) 5 à 20 % en poids d'au moins un composé choisi dans le groupe constitué par le (méth)acrylate de 2-(2-oxo-imidazolidin-1-yl)-éthyle, le (méth)acrylate de 2-uréidoéthyle (UMA), l'acrylate d'acétoacétoxyéthyle, le méthacrylate d'acétoacétoxypropyle, le méthacrylate d'acétoacétoxybutyle, le méthacrylate de 2-(acétoacétoxy)éthyle, le diacétone acrylamide (DAAM), le diacétone méthacrylamide ou des mélanges correspondants,
A4) 0 à 5 % en poids d'au moins un régulateur du poids moléculaire, et
B) 0,05 à 5 % en poids d'au moins un émulsifiant copolymérisable anionique,

les données quantitatives de A1) à B) se rapportant à chaque fois à 100 % en poids des monomères à polymériser

dans la 1re composition.

**11.** Dispersion de polymère selon l'une quelconque des revendications 1 à 10, la dispersion de polymère étant exempte d'émulsifiants non polymérisables.

**12.** Procédé pour la préparation d'une dispersion de polymère selon l'une quelconque des revendications 1 à 11, au moins une polymérisation en émulsion en deux étapes étant réalisée, comprenant les étapes de :

1) préparation d'un polymère A par une polymérisation radicalaire à partir d'une 1re composition, comprenant

A) au moins un monomère,
B) au moins un émulsifiant copolymérisable anionique,

2) mise en contact du polymère A préparé dans 1) avec une base, le poids moléculaire moyen en poids des polymères de la polymérisation de la première étape se situant entre 5 et 25 kDa et les monomères de la polymérisation de la première étape étant choisis de sorte que la température de transition vitreuse calculée pour un polymère préparé à partir des monomères de la première étape se situe dans la plage de 70 °C à 125 °C,
3) préparation d'un polymère B par polymérisation radicalaire à partir d'une 2e composition en présence du polymère A traité dans 2), comprenant

A) au moins un monomère hydrophile et/ou hydrophobe,
B) au moins un émulsifiant copolymérisable anionique, les monomères de la polymérisation de la deuxième étape étant choisis de sorte que la température de transition vitreuse calculée pour un polymère préparé à partir des monomères de la deuxième étape se situe dans la plage de 0 °C à -80 °C,

au moins un régulateur du poids moléculaire étant utilisé dans la polymérisation de la première étape.

**13.** Procédé pour la préparation d'une dispersion de polymère selon l'une quelconque des revendications 1 à 11, au moins une polymérisation en émulsion en deux étapes étant réalisée,
comprenant les étapes de :

1) préparation d'un polymère A dispersé dans de l'eau en milieu aqueux par polymérisation radicalaire à partir d'une 1re composition, la 1re composition comprenant

A1) au moins un (cyclo)alkylester d'acide (méth) acrylique.
A2) au moins un acide carboxylique $\alpha,\beta$-éthyléniquement insaturé.
A3) au moins un composé choisi dans le groupe constitué par le (méth)acrylate de 2-(2-oxo-imidazolidin-1-yl)-éthyle, le (méth)acrylate de 2-uréidoéthyle (UMA), l'acrylate d'acétoacétoxyéthyle, le méthacrylate d'acétoacétoxypropyle, le méthacrylate d'acétoacétoxybutyle, le méthacrylate de 2-(acétoacétoxy)éthyle, le diacétone acrylamide (DAAM), le diacétone méthacrylamide ou des mélanges correspondants, et
A4) au moins un régulateur du poids moléculaire, et
B) au moins un émulsifiant copolymérisable anionique,

2) mise en contact du polymère A préparé dans 1) avec une base,
3) préparation d'un polymère B par polymérisation radicalaire à partir d'une 2e composition en présence du polymère A traité dans 2), la 2e composition comprenant

A1) au moins un (cyclo)ester d'acide (méth)acrylique, et
B) au moins un émulsifiant copolymérisable anionique.

**14.** Procédé pour la préparation d'une dispersion de polymère selon l'une quelconque des revendications 1 à 11, l'au moins un émulsifiant copolymérisable anionique étant choisi dans le groupe constitué par

(1) un composé selon la formule (I)

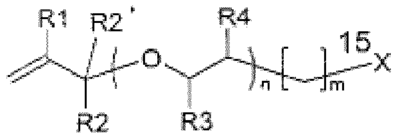 (I)

avec la signification

R1 : H, alkyle, cycloalkyle, aralkyle, aryle ou alcoxylaryle,
R2, R2' = H ou R2 et R2' = O,
R3 : H ou alkyle,
R4 : H ou OH,
X : $SO_3^-$, $HPO_4^-$, $PO_4^{2-}$ ou $COO^-$,
m : 0 ou 1,
n : un nombre entier entre 0 et 1000 ;

(2) un composé selon la formule (II)

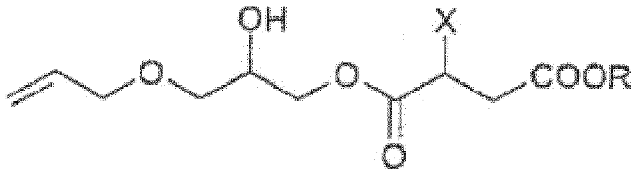 (II)

avec la signification

X : $SO_3^-$, $PO_4^{2-}$ ou $SO_4^-$,
R : H, alkyle, cycloalkyle, aralkyle, aryle ou alcoxylaryle ;

(3) un composé de la formule (III)

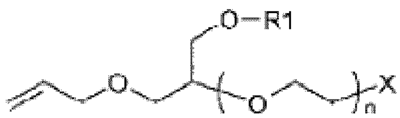 (III)

avec la signification

R1 : H, alkyle, cycloalkyle, aralkyle, aryle ou alcoxylaryle,
X : $SO_4^-$, $SO_3^-$, $HPO_4^-$, $PO_4^{2-}$ ou $COO^-$,
n : un nombre entier entre 0 et 1000 ;

(4) un composé de la formule (IV)

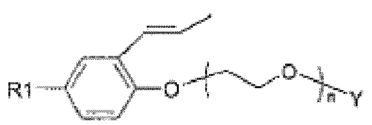 (IV)

avec la signification

R1 : H, alkyle, cycloalkyle, aralkyle, aryle ou alcoxylaryle, et
Y : $SO_3^-$, $PHO_3^-$ ou $PO_3^{2-}$,
n : un nombre entier entre 0 et 1000 ;

ou des mélanges des composés des formules (I) à (IV).

**15.** Agent de revêtement sous forme d'une composition aqueuse, contenant

i) au moins une dispersion de polymère selon l'une quelconque des revendications 1 à 11,
ii) éventuellement au moins une charge (in)organique et/ou un pigment (in)organique,
iii) éventuellement un additif,
iv) de l'eau.

**16.** Utilisation d'une dispersion de polymère selon l'une quelconque des revendications 1 à 11 pour des masses de revêtement.

**17.** Utilisation d'une dispersion de polymère selon l'une quelconque des revendications 1 à 11 pour des peintures.

Fig. 1

VB1 B1 B2 B3 VB2

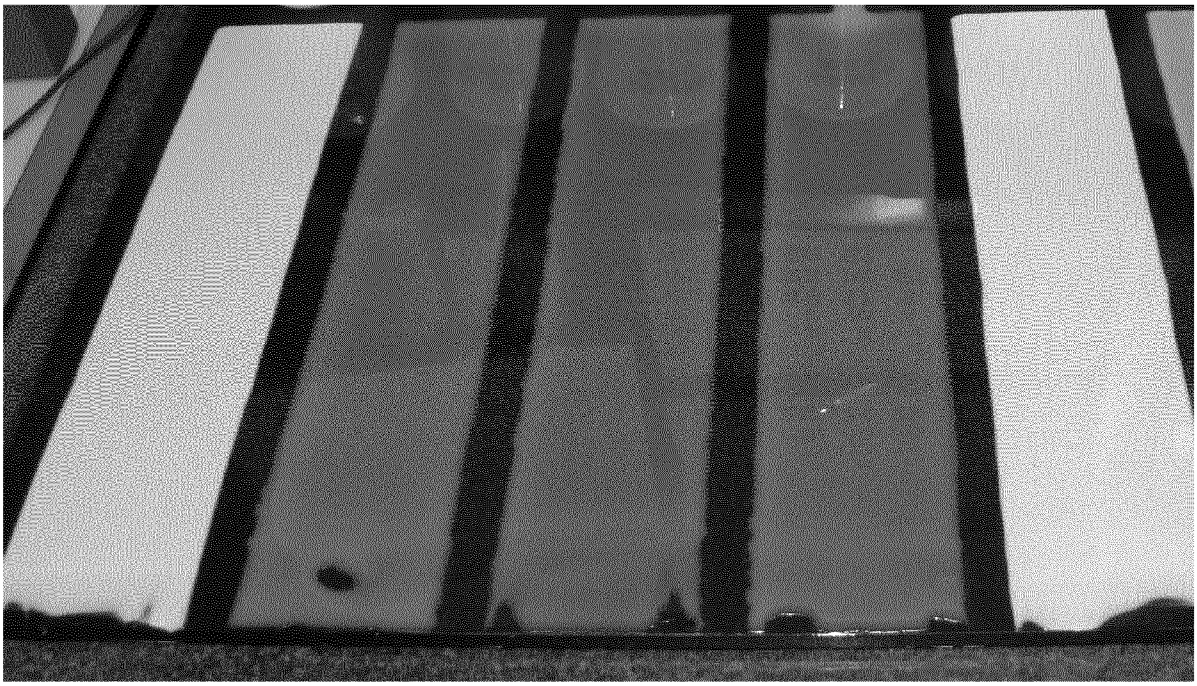

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0710680 B
- WO 2008152017 A
- WO 2012130712 A1
- WO 9529963 A1
- WO 9529944 A1
- WO 2012084973 A
- WO 2012084974 A1
- EP 0338486 A2
- WO 20122140042 A
- EP 2371870 A1
- US 2005107527 A1
- DE 4003422 A
- EP 0789724 A
- US 4526945 A
- US 4680354 A
- EP 0196783 A
- EP 0199436 A
- WO 8703605 A
- US 4269749 A


### In der Beschreibung aufgeführte Nicht-Patentliteratur


- Encyclopedia of Polymer Science and Engineering. 1987, vol. 8, 659 ff
- **D. C. BLACKLEY.** *High Polymer Latices,* 1966, vol. 1, 35 ff
- **H. WARSON.** The Applications of Synthetic Resin Emulsions. 1972, 246 ff
- **D. DIEDERICH.** *Chemie in unserer Zeit,* 1990, vol. 24, 135-142
- Emulsion Polymerisation. Interscience Publishers, 1965
- **T.G. FOX.** *Bull. Am. Phys. Soc.,* 1956, 123
- Ullmann's Encyclopädie der technischen Chemie. Verlag Chemie, 1980, vol. 19, 18
- Ullmann's Ecyclopedia of Industrial Chemistry. VCH Weinheim, 1992, vol. A21, 169
- **J. BRANDRUP ; E.H. IMMERGUT.** Polymer Handbook. J. Wiley, 1966
- POLYMER HANDBOOK. J. Wiley, 1975
- POLYMER HANDBOOK. J. Wiley, 1981
- **B. N. S. ENIKOLOPYAN et al.** *J. Polym. Sci., Polym. Chem. Ed.,* 1981, vol. 19, 879
- Methoden der organischen Chemie. **HOUBEN-WEYL.** Makromolekulare Stoffe. Georg-Thieme-Verlag, 1961, vol. XIV/1, 192-208
- **M. SCHWARTZ ; R. BAUMSTARK.** *water-based acrylates for decorative coatings,* ISBN 3-87870-726-6